Europäisches Patentamt

European Patent Office

Office européen des brevets

(19)

(11) Numéro de publication : **0 555 138 A1**

(12) # DEMANDE DE BREVET EUROPEEN

(21) Numéro de dépôt : **93400254.4**

(22) Date de dépôt : **02.02.93**

(51) Int. Cl.⁵ : **G06F 13/372, C09K 19/34, C07C 22/08, C07C 255/50, C07D 239/26, C07C 43/225, C07C 69/83, G02F 1/13**

(30) Priorité : **05.02.92 FR 9201288**

(43) Date de publication de la demande : **11.08.93 Bulletin 93/32**

(84) Etats contractants désignés :
**DE ES GB IT NL**

(71) Demandeur : **SEXTANT Avionique**
**5/7 rue Jeanne Braconnier Parc Tertiaire**
**F-92368 Meudon la Forêt Cédex (FR)**

(72) Inventeur : **Clauzel, Yves**
**64 Avenue d'Espoulette**
**F-26200 Montelimar (FR)**
Inventeur : **Jaeger, Christian**
**10 Allée des Marguerites**
**F-26000 Valence (FR)**

(74) Mandataire : **Bloch, Gérard et al**
**2, square de l'Avenue du Bois**
**F-75116 Paris (FR)**

(54) **Procédé, système et processeur de communication entre une pluralité de sous-ensembles d'un équipement.**

(57) A chaque sous-ensemble (SEi) de l'équipement est associé au moins un canal logique associé lui-même à au moins un canal physique, chaque sous-ensemble adressant uniquement les canaux logiques auxquels il est associé, et les différents canaux physiques étant multiplexés dans le temps sur un bus (BCI) de communication interne à l'équipement.

Application à des systèmes de radiocommunication ou de navigation embarqués.

FIG.1

La présente invention concerne un procédé, un système et un processeur de communication entre une pluralité de sous-ensembles d'un équipement, notamment embarqué.

Des équipements tels que les systèmes de radiocommunication ou de navigation embarqués sur les aéronefs ont tendance à comporter un nombre croissant de sous-ensembles, eux-mêmes de plus en plus complexes, qu'il est nécessaire de faire communiquer entre eux. De plus, ces sous-ensembles recoivent eux-mêmes généralement des informations de l'extérieur de l'équipement par l'intermédiaire de lignes d'entrée/sortie telles que des lignes ARINC (Aeronautical Radio, Inc.).

Les liaisons électriques entre ces différents sous-ensembles sont donc de plus en plus difficiles à réaliser, que ce soit au niveau de leur conception elle-même ou de leur réalisation.

En ce qui concerne la conception de ces liaisons, il est en effet nécessaire, non seulement de tenir compte des contraintes liées à chaque sous-ensemble, mais également de celles liées aux lignes d'entrée/sortie qui généralement sont normalisées.

En ce qui concerne la réalisation de ces liaisons, il est impératif de chercher à diminuer leur volume et leur longueur afin de faciliter leur cablage et de diminuer leur poids.

Il est également souhaitable que ces équipements puissent être facilement testés et mis au point et que les sous-ensembles dont ils sont composés puissent être interchangés avec un minimum de modifications des logiciels qui y sont incorporés.

La présente invention vise à apporter des solutions à ces problèmes.

A cet effet, l'invention a tout d'abord pour objet un procédé de transmission de données d'information entre une pluralité de sous-ensembles d'un équipement, notamment embarqué, caractérisé par le fait qu'à chaque sous-ensemble est associé au moins un canal logique associé lui-même à au moins un canal physique, chaque sous-ensemble adressant uniquement les canaux logiques auxquels il est associé, et les différents canaux physiques étant multiplexés dans le temps sur un bus de communication interne à l'équipement.

Par conséquent, lorsqu'un sous-ensemble doit transmettre des données à un autre sous-ensemble, il n'adresse ni ce sous-ensemble particulier ni un canal physique particulier du bus sur lequel les données sont multiplexées dans le temps, mais uniquement des canaux logiques qui sont eux-mêmes associés à des canaux physiques. Il est donc particulièrement aisé de modifier l'équipement puisqu'en particulier de nouveaux sous-ensembles peuvent lui être ajoutés en prenant pratiquement pour seule précaution d'associer les canaux logiques d'un nouveau sous-ensemble à des canaux physiques non encore utilisés dans l'équipement.

La mise au point et les tests d'un équipement utilisant un tel procédé de transmission peuvent en outre être réalisés aisément puisque toutes les données échangées entre les différents sous-ensembles de l'équipement sont directement accessibles sur le bus de communication interne.

Plus particulièrement, au moins un sous-ensemble de l'équipement peut être relié à au moins une ligne d'entrée/sortie, toute donnée d'information émise par un sous-ensemble sur une ligne d'entrée/sortie qui lui est reliée étant en outre transmise sur le bus de communication interne à tous les autres sous-ensembles, et toute donnée d'information reçue par un sous-ensemble sur une ligne d'entrée/sortie qui lui est reliée étant retransmise sur le bus de communication interne à tous les autres sous-ensembles.

Toutes les données d'entrée/sortie sont par conséquent disponibles sur le bus de communication interne pour chacun des sous-ensembles.

Les données d'information sont. avantageusement traitées sous forme parallèle au niveau des canaux logiques, et sous forme série au niveau des canaux physiques.

Le traitement parallèle au niveau des canaux logiques est particulièrement adapté au fait qu'un sous-ensemble est très généralement organisé autour d'un microprocesseur alors que le traitement série au niveau des canaux physiques facilite le multiplexage sur le bus de communication interne.

Dans le cas où au moins un sous-ensemble est relié en outre à au moins une ligne d'entrée/sortie, toutes les lignes d'entrée/sortie fonctionnent de préférence à une fréquence sous-multiple d'une fréquence de base, la fréquence de fonctionnement du bus de communication interne étant un multiple de ladite fréquence de base.

Dans le cas par exemple de lignes d'entrée/sortie ARINC 429, pouvant fonctionner soit à 12,5 KHz, soit à 100 KHz, c'est-à-dire à une fréquence sous-multiple de 100 KHz, on pourra multiplexer les canaux physiques sur le bus de communication interne à une fréquence de 10 MHz. Le multiplexage utilisé sur le bus de communication interne consiste donc dans ce cas à découper la durée d'un bit ARINC de 10 micro-secondes en 100 morceaux de 100 nano-secondes chacun, a affecter chaque morceaux à un canal physique et à multiplexer les bits de ces 100 canaux dans l'intervalle de temps initial sur le bus de communication interne.

L'intérêt principal de ce procédé particulier est donc qu'avant et après le multiplexage, c'est-à-dire au niveau des sous-ensembles, chaque canal se comporte comme une ligne ARINC traditionnelle.

Des sous-ensembles existant peuvent donc être mis en place dans l'équipement tout en conservant l'essentiel de leurs logiciels d'origine.

Dans le procédé selon l'invention, on peut donc transmettre sur le bus de commuunication interne un bit

2

de donnée d'information à chaque occurence d'un canal physique.

La présente invention a également pour objet un système de communication pour équipement, notamment embarqué, comprenant une pluralité de sous-ensembles dont l'un au moins comporte au moins une ligne d'entrée/sortie, toutes les lignes d'entrée/sortie fonctionnant à une fréquence sous-multiple d'une même fréquence de base, caractérisé par le fait que chaque sous-ensemble comporte en outre au moins un processeur de communication relié à ladite lignée d'entrée/sortie, lesdits processeurs de communication étant en outre reliés entre eux par un bus de communication interne sur lesquel sont multiplexés une pluralité de canaux physiques à une fréquence multiple de ladite fréquence de base.

Chaque processeur de communication est par conséquent relié, d'une part, aux lignes d'entrée/sortie de son sous-ensemble et, d'autre part, par l'intermédiaire du bus de communication interne, à chacun des processeurs de communication des autres sous-ensembles. Du fait que les canaux physiques sont multipliés à une fréquence multiple de la fréquence de base des lignes d'entrée/sortie, chaque sous-ensemble voit, après démultiplexage chaque canal physique comme une de ses propres lignes d'entrée/sortie.

Dans un mode de réalisation particulier du système de communication selon l'invention, le bus de communication interne est une liaison à une pluralité de fils, un premier fil véhiculant un signal de synchronisation à ladite fréquence de base, un deuxième fil véhiculant un signal d'horloge indiquant les changements de canaux physiques, et les autres fils, par exemple deux fils, véhiculant des données d'information.

Le bus de communication interne de l'invention est par conséquent particulièrement simple puisqu'il peut ne comporter que quatre fils dont deux fils de données, ce qui permet d'utiliser un protocole très voisin de celui des normes ARINC, et plus particulièrement de celui de la norme ARINC 429. Dans le cas où les lignes d'entrée/sortie sont effectivement des lignes ARINC 429, le signal de synchronisation est alors un signal à 100 KHz, le signal d'horloge pouvant être par exemple un signal à une fréquence multiple de 10 MHz, par exemple 20 MHz, pour multiplexer 100 canaux physiques sur la durée d'un bit des lignes d'entrée/sortie.

Chaque processeur de communication peut posséder un compteur de canaux physique apte à être incrémenté par le signal d'horloge et à être remis à zéro par le signal de synchronisation pour la détermination des numéros des canaux physiques.

Plus particulièrement, chaque processeur de communication peut posséder une horloge interne et un générateur de phases pour relier l'entrée d'incrémentation de son compteur de canaux physiques soit au fil d'horloge du bus de communication interne, soit à son horloge interne, le générateur de phases étant également agencé pour élaborer un signal de synchronisation et des moyens étant prévus pour relier sélectivement la sortie de synchronisation du générateur de phases au fil de synchronisation du bus de communication interne, l'un des processeurs de communication du système ayant son horloge interne reliée au fil d'horloge de bus de communication interne, et la sortie de synchronisation de son générateur de phases reliée au fil de synchronisation du bus de communication interne, chaque processeur ayant l'entrée d'incrémentation de son compteur de canaux physiques reliée au fil d'horloge du bus de communication interne et son entrée de remise à zéro reliée au fil de synchronisation du bus de communication interne.

Dans le cas où au moins un sous-ensemble comporte une unité centrale et une mémoire reliées par un bus local, le processeur de communication de ce sous-ensemble est en outre de préférence relié audit bus local.

Le comportement de ce processeur de communication peut alors être de type "maître" lorsqu'il prend le contrôle du bus pour un accès direct à la mémoire, ou du type "esclave" quand il reçoit un ordre de l'unité centrale.

Chaque unité centrale peut plus particulièrement être agencée pour échanger sur le bus local, avec le processeur de communication auquel elle est reliée, des données d'informations associées à des numéros de canaux logiques indépendants des canaux physiques, le processeur de communication étant agencé pour associer un canal logique de l'unité centrale à un canal physique de bus de communication interne.

Par conséquent, l'unité centrale de chaque sous-emsemble adresse uniquement des canaux logiques sans qu'il soit nécessaire de se préoccuper au niveau de cette unité des canaux physiques associés par le processeur de communication à ces canaux logiques.

La présente invention a également pour objet un processeur de communication entre une pluralité de sous-ensembles d'un équipement, notamment embarqué, caractérisé par le fait qu'il comprend :

- des moyens de liaison à un premier sous-ensemble dudit équipement, agencés pour échanger avec ledit premier sous-ensemble des données d'informations associées à au moins un numéro de canal logique ;
- des moyens de liaison à au moins un deuxième sous-ensemble dudit équipement, agencés pour échanger lesdites données d'information avec ledit deuxième sous-ensemble pendant la durée des occurences successives d'un canal physique, un ensemble de canaux physiques se suivant à une fréquence et selon un ordre prédéterminé ; et
- des moyens d'association pour associer chaque canal logique à au moins un canal physique.

Le processeur de communication selon l'invention échange donc avec le premier sous-ensemble des données associées à des numéros de canaux logiques qui seuls ont à être connus du premier sous-ensemble, puis associe un canal physique à chacun de ces canaux logiques et multiplexe les canaux physiques à une fréquence et selon un ordre prédéterminé.

Plus particulièrement, les moyens de liaison au premier sous-ensemble peuvent comprendre une unité de liaison à une unité centrale dudit premier sous-ensemble ainsi que des moyens d'accès direct à une mémoire de ce premier sous-ensemble.

Dans un mode de réalisation particulier de l'invention, lesdits moyens d'accès direct comprennnent des moyens pour former une adresse de ladite mémoire du premier sous-ensemble au moins en fonction du numéro du canal logique associé auxdites données d'information, une mémoire contenant une information sur le mode de fonctionnement de ce canal logique, et des moyens pour lire ou écrire lesdites données d'information à ladite adresse selon ladite information sur le mode de fonctionnement du canal logique.

On comprend par conséquent que le processeur de communication de l'invention associe à chaque canal logique une adresse de la mémoire du premier sous-ensemble à laquelle seront lues ou écrites les données à transmettre au deuxième sous-ensemble ou, respectivement,reçues de ce deuxième sous-ensemble.

Les données peuvent ainsi être lues ou écrites en mémoire les unes à la suite des autres à partir de l'adresse ainsi formée, cas de fonctionnement dit en mode anneau, ou encore être lues ou écrites à une adresse formée non seulement en fonction du numéro du canal logique mais également en fonction d'une partie des données d'information échangées, cas du fonctionnement dit en mode label.

Dans un mode de réalisation particulier de l'invention, lesdits moyens de liaison au premier sous-ensemble comprennent une mémoire d'échange dont chaque zone de mémoire est affectée à un canal logique et est prévue pour contenir soit des données d'information provenant dudit premier sous-ensemble et destinées aux moyens de liaison au deuxième sous-ensemble, soit des données d'information provenant desdits moyens de liaison au deuxième sous-ensemble et destinées au premier sous-ensemble, selon le mode de fonctionnement du canal logique considéré, et pour contenir une information de requête/acquitement.

La mémoire d'échange consiste donc non seulement en une mémoire tampon mais encore à un moyen permettant de réguler les échanges d'information entre les moyens de liaison au premier sous-ensemble et les moyens de liaison au deuxième sous-ensemble.

Plus particulièrement, le processeur de communication de l'invention peut comprendre des moyens pour donner une première valeur à ladite information de requête/acquitement lorsqu'un mot provenant des moyens de liaison au deuxième sous-ensemble à été placé dans ladite zone de mémoire à la disposition des moyens de liaison au premier sous-ensemble ou lorsqu'un mot placé dans ladite zone de mémoire par les moyens de liaison au premier sous-ensemble a été lu pour sa transmission aux moyens de liaison au deuxième sous-ensemble, selon le mode de fonctionnement du canal logique associé à cette zone de mémoire, et des moyens pour donner une deuxième valeur à ladite information de requête/acquitement lorsque le mot mis à la disposition des moyens de liaison au premier sous-ensemble a été lu par ces derniers ou, respectivement, lorsqu'un nouveau mot a été placé dans ladite zone de mémoire par les moyens de liaison au premier sous-ensemble en vue de sa transmission aux moyens de liaison au deuxième sous-ensemble.

Dans ce dernier cas, les moyens de liaison au premier sous-ensemble peuvent comprendre un compteur d'adressage pour adresser successivement chaque zone de mémoire de la mémoire d'échange, des moyens pour lire le contenu de cette zone de mémoire, des moyens pour analyser la valeur de l'information de requête/acquitement contenu dans cette zone et pour arrêter ledit compteur d'adressage lorsque cette information de requête/acquitement a sa première valeur, et des moyens pour, dans ce cas, et selon le mode de fonctionnement du canal logique associé à la zone de mémoire, placer dans cette zone un nouveau mot en vue de sa transmission aux moyens de liaison au deuxième sous-ensemble ou transmettre au premier sous-ensemble le mot lu, et pour donner sa deuxième valeur à l'information de requête/acquitement.

Le compteur d'adressage permet donc un balayage de la mémoire d'échange et le traitement des canaux logiques pour lesquels une requête est présente.

Les moyens de liaison au premier sous-ensemble peuvent en outre comprendre une mémoire de configuration des canaux logiques dont chaque zone est affectée à un canal logique et est prévue pour contenir des informations nécessaires au traitement de ce canal logique par les moyens de liaison au premier sous-ensemble, cette mémoire de configuration étant adressée en synchronisme avec la mémoire d'échange.

La mémoire de configuration permet donc notamment de réaliser les accès direct à la mémoire du premier sous-ensemble.

Dans un mode de réalisation particulier de l'invention, les moyens d'association comprennent un compteur de canaux physiques et une mémoire d'association dont chaque zone de mémoire est adressée par ledit compteur de canaux physiques, et est prévue pour contenir au moins le numéro d'un canal logique associé au canal physique correspondant à la valeur du compteur.

Les canaux physiques se suivant à une fréquence et selon un ordre prédéterminé, le compteur adresse par conséquent successivement tous les canaux physiques et permet de déterminer quel est le canal logique en cours de traitement.

Chaque zone de mémoire de la mémoire d'association peut être en outre agencée pour contenir une information indiquant si le canal physique correspondant à cette zone est effectivement associé à un canal physique.

Il est ainsi possible de n'utiliser que certains des canaux physiques, la durée des canaux physiques non utilisés étant alors utilisée pour le traitement des données.

Chaque zone de mémoire de la mémoire d'association peut en outre contenir une information sur le mode de fonctionnement du canal logique associé au canal physique correspondant à la valeur du compteur.

Il est ainsi possible de connaître directement au niveau des moyens d'association le mode de fonctionnement du canal logique associé à un canal physique donné, et notamment de savoir s'il fonctionne en émission ou en réception, ou en mode anneau ou en mode label.

Dans un mode particulier de l'invention, lesdits moyens de liaison au deuxième sous-ensemble comprennent une mémoire des contextes dont chaque zone de mémoire est affectée à un canal logique et est prévue pour contenir au moins un mot en cours de traitement sur le canal logique correspondant.

Chaque zone de mémoire de la mémoire des contextes peut en outre être pourvue d'un emplacement de mémoire formant compteur pour contenir la position du prochain bit à traiter dans le mot en cours de traitement.

Une zone de mémoire de la mémoire des contextes se comporte donc comme le ferait un registre à décalage, la position du prochain bit à traiter, gérée comme un compteur, indiquant le nombre de décalages déjà effectués.

Chaque zone de mémoire de la mémoire des contextes peut en outre comprendre un emplacement de mémoire apte à recevoir la valeur du prochain bit à émettre ou du dernier bit reçu.

Un tel agencement permet de "pipeliner" le transfert des données à travers les moyens de liaison au deuxième sous-ensemble, permettant ainsi de distinguer les tâches de traitement des tâches de transmission afin de disposer du plus possible de temps pour chacune de ces actions.

Dans un mode de réalisation particulier de l'invention, lesdits moyens de liaison au deuxième sous-ensemble comprennent une unité de traitement agencée pour recevoir, à chaque occurence d'un canal physique, des données relatives au contexte du canal logique associé à ce canal physique, ces données comportant au moins un mot en cours de traitement sur ce canal logique, et une interface de liaison entre ladite unité de traitement et le deuxième sous-ensemble, l'unité de traitement étant agencée pour remettre à jour à chacune desdites occurences, lesdites données relatives au contexte en fonction au moins d'une information échangée avec ladite interface.

Le traitement des canaux logiques s'effectue par conséquent mot par mot, l'unité de traitement remettant à jour le contexte du canal logique traitant un mot particulier au fur et à mesure de l'échange de ce mot avec l'interface.

L'unité de traitement des moyens de liaison au deuxième sous-ensemble peut également être reliée aux moyens de liaison au premier sous-ensemble par l'intermédiaire d'une mémoire d'échange dont chaque zone de mémoire est affectée à un canal logique et est prévue pour contenir des mots de données d'information à échanger avec les moyens de liaison au premier sous-ensemble et une information de requête/acquitement, et une interface de liasion entre ladite unité de traitement et le deuxième sous-ensemble, l'unité de traitement étant agencée pour, lorsque l'information de requête/acquitement a une certaine valeur, échanger un mot de données d'information avec la mémoire d'échange et donner une autre valeur à l'information de requête/acquitement, et pour, selon le contexte du canal logique, transmettre le mot échangé à l'interface ou recevoir de l'interface un nouveau mot à échanger.

Là encore, le traitement s'effectue par conséquent mot par mot au niveau de la mémoire d'échange, l'unité de traitement formant une requête lorsqu'un mot à transmettre à l'interface a été lu dans la mémoire d'échange ou lorsqu'un mot transmis par l'interface a été écrit dans la mémoire d'échange, et les moyens de liaison au premier sous-ensemble acquittant cette requête lorsqu'un nouveau mot a été placé dans la mémoire d'échange pour sa transmission à l'interface ou lorsqu'un mot provenant de cet interface a été lu dans cette mémoire.

Les liaisons entre l'unité de traitement et les mémoires des contextes et d'échange sont de préférence des liaisons parallèles alors que la liaison entre l'unité de traitement et l'interface est une liaison série.

Dans un mode de réalisation particulier, les mémoires des contextes et d'échange sont adressées par un registre de sortie d'une mémoire d'association elle-même adressée par un compteur de canaux physiques.

Le processeur de communication selon l'invention peut avantageusement comprendre des liaisons à au moins une ligne d'entrée/sortie.

Dans un mode de réalisation particulier, les moyens de liaison au deuxième sous-ensemble comprennent des moyens de liaison à un bus de communication interne à l'équipement, agencé pour véhiculer lesdites données d'information et des données d'horloge, et un compteur de canaux physiques pour déterminer, à partir des données d'horloge prélevées sur le bus de communication interne, le numéro d'ordre dans le temps du canal physique présent sur le bus de communication interne.

On décrira maintenant, à titre d'exemple non limitatif, un mode de réalisation particulier de l'invention, en référence aux dessins schématiques annexés, dans lesquels :

- la figure 1 est un schéma d'ensemble d'un équipement comportant un système de communication selon l'invention ;
- la figure 2 est un diagramme des temps des signaux apparaissant sur le bus de communication interne ;
- la figure 3 représente le format d'un registre de contrôle canal ;
- la figure 4 montre l'organisation en mémoire des descripteurs de canaux en mémoire ;
- la figure 5 montre le format d'un descripteur de canal en mode label ;
- la figure 6 montre le format d'un descripteur de canal en mode anneau ;
- la figure 7 montre le format du registre d'état d'interruption canal ;
- la figure 8 est un schéma d'ensemble d'un processeur de communication selon l'invention ;
- la figure 9 illustre un accès DMA en réception en mode anneau ;
- la figure 10 illustre un accès DMA en réception en mode label ;
- la figure 11 illustre un accès DMA en émission ;
- la figure 12 est un schéma de l'unité de traitement des canaux ;
- la figure 13 illustre le fonctionnement du générateur de phases de l'unité de traitement ;
- la figure 14 montre le format des données contenues dans la mémoire des contextes ;
- la figure 15 montre le format des données contenues dans la mémoire d'échange ;
- la figure 16 est un schéma du bloc de gestion des canaux des circuits de DMA ; et
- la figure 17 est un schéma de l'interface en réception ARINC.

On supposera dans la description qui suit que les lignes d'entrée/sortie de l'équipement sont des lignes conformes à la norme ARINC 429, mais des lignes de tout autre type, notamment conformes à d'autres normes ARINC, pourraient être envisagées.

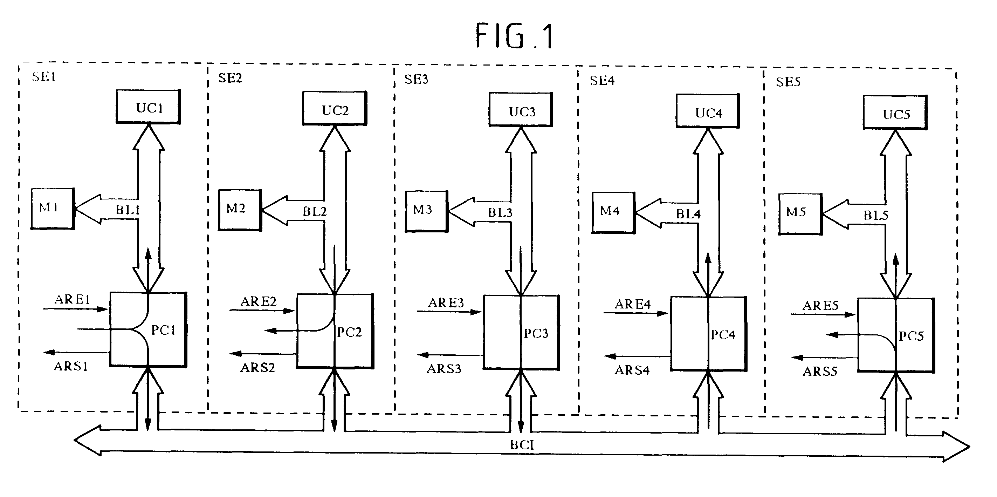

L'équipement représenté à la figure 1 est composé ici de cinq sous-ensemble SE1 à SE5, comportant chacun une unité centrale UCi, par exemple du type 680 XX, et une mémoire MI reliée par un bus local BLi.

Chaque sous-ensemble SEi comporte également, conformément à l'invention, un processeur de communication PCi relié au bus local BLi. Le processeur de communication PCi reçoit également en entrée un certain nombre de lignes ARINC, par exemple dix, AREi, et peut sortir sur un certain nombre de lignes ARINC, par exemple six, ARSi. Tous les processeurs de communication PCi sont en outre reliés entre eux par un même bus de communication interne BCI.

Les différents types de communication que l'on peut envisager entre sous-ensembles, d'une part, et entre lignes ARINC d'autre part, sont représentés sur la figure 1.

La configuration du sous-ensemble SEI correspond à une réception sur une ligne ARINC, avec émission simultanée sur le bus BCI des données reçues.

La configuration du sous-ensemble SE2 correspond à une émission sur une ligne ARINC, avec émission simultanée sur le bus BCI des données émises sur la ligne ARINC.

La configuration du sous-ensemble SE3 correspond à une émission simple sur le bus BCI.

La configuration du sous-ensemble SE4 correspond à une réception simple sur le bus BCI.

La configuration du sous-ensemble SE5 correspond à une réception sur le bus BCI, avec émission simultanée sur une ligne ARINC des données reçues.

On constate que toute information émise sur une ligne ARINC est également émise sur le bus de communication interne BCI (cas de SE2), et que toute information reçue d'une ligne ARINC est retransmise au bus BCI (cas de SE1). Le bus de communication interne BCI est un bus fond de panier série sur lequel sont multiplexés 96 canaux physiques, un canal physique pouvant transmettre soit les informations d'une ligne ARINC, soit des informations internes de sous-ensemble à sous-ensemble.

Les vitesses de transmission spécifiées par la norme ARINC s'appliquent en effet bien à des communications à longue distance mais dans le cas d'un bus fond de panier, les distances à parcourir étant beaucoup plus faibles, il est possible d'adopter une fréquence beaucoup plus élevée.

Dans le cas présent, on découpe la durée d'un bit ARINC de 10 micro-secondes en 100 morceaux de 100 nano-secondes chacun, on affecte chaque morceau à un canal de communication et on multiplexe les bits de ces 100 canaux sur le bus de communication interne.

En fait, on fixe pour des raisons pratiques le nombre de canaux à 96, la durée de quatre canaux étant par conséquent inutilisée pour la communication.

Le bus de communication interne BCI est ici une liaison à quatre fils.

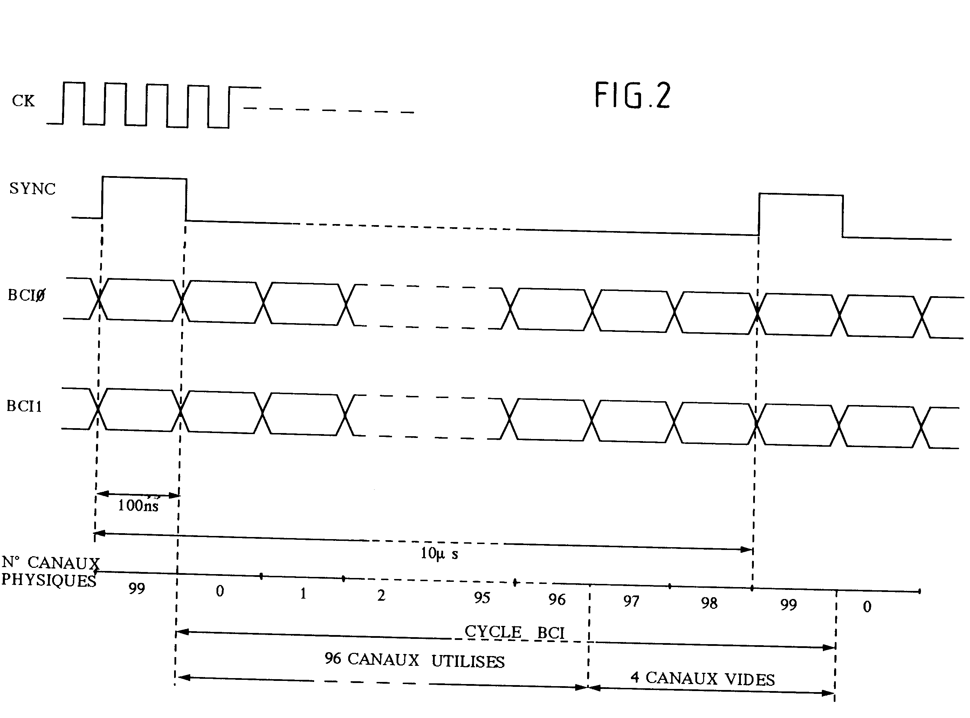

La figure 2 représente les diagrammes des temps des signaux observés sur ces quatre fils.

Le fil CK véhicule un signal d'horloge à 20 MHz, qui indique les changements de canaux, un canal durant deux cycles d'horloge soit 100 nano-secondes.

Le fil SYNC supporte un signal de synchronisation constitué par une impulsion toutes les dix microsecondes signalant l'arrivée du canal zéro.

Enfin, les fils BCI0 et BCI1 véhiculent les données d'information avec les conventions du tableau 1 ci-dessous.

| BIC0 | BIC1 | Signification |
|------|------|---------------|
| 0 | 0 | GAP (aucune donnée) |
| 0 | 1 | "1" logique |
| 1 | 0 | "0" logique |
| 1 | 1 | BID (bit déjà émis) |
| TABLEAU 1 | | |

La valeur GAP possède la même signification que dans la norme ARINC. On sait que dans cette norme quatre GAP au moins séparent les mots de 32 bits.

La valeur BID, quant à elle, est utilisée pour indiquer l'absence d'un bit à l'intérieur d'un mot, sans que cela soit interprété comme un GAP. Une telle absence de bit se produit si l'on retransmet sur le bus de communication interne des informations plus vite qu'on ne les reçoit, ce qui est le cas par exemple lorsque l'on reçoit sur une ligne ARINC à 12,5 KHz avec retransmission sur le bus de communication interne à 100 KHz. C'est également le cas lorsque l'on reçoit sur une ligne ARINC à 100 KHz - 1 % avec retransmission sur le bus de communication à 10 KHz + 1 % (glissement de fréquence autorisé par les normes ARINC). Dans le cas où les lignes d'entrée/sortie sont des lignes ARINC, il est bien entendu que la valeur BID ne se trouve jamais sur ces lignes mais uniquement sur le bus de communication interne BCI.

Chaque processeur de communication PCi échange des informations avec l'unité centrale associée UCi par l'intermédiaire de la mémoire Mi, sur des canaux logiques auxquels sont associés chaque type d'information. Les unités centrales UCi ne connaissent que les canaux logiques sur lesquels elles émettent ou reçoivent des informations, l'association canal logique-canal physique s'effectuant uniquement au niveau des processeurs de communication.

Dans le cas présent, chaque processeur de communication peut gérer 32 canaux logiques en associant chacun de ces canaux à l'un quelconque des 96 canaux physiques du bus de communication interne BCI, pourvu qu'un canal logique ne soit pas affecté à plusieurs canaux physiques..

Les canaux logiques 0 à 15 sont ici associés chacun à une ligne ARINC qui peut être utilisée pour des communications avec l'extérieur de l'équipement, les canaux 0 à 9 étant utilisés en réception et les canaux 10 à 15 étant utilisés en réception. Les liaisons entre les lignes ARINC d'entrée AREi utilisées en réception et les lignes ARINC de sortie ARSi utilisées en émission sont réalisées par des coupleurs ARINC de type connu.

On comprend par conséquent qu'un canal est constitué par l'ensemble des ressources nécessaires à l'établissement d'une communication. Ces ressources décrites en détail ci-après peuvent être matérielles (registre, lignes ARINC, mémoires internes du processeur de communication) ou logicielles (descripteur, mémoires tampons).

Un canal peut être désigné par les objets qu'il met en relation au niveau de l'équipement, son numéro physique au niveau du bus de communication interne (tests, mise au point) ou encore par son numéro logique au niveau de la fonction d'un sous-ensemble et notamment au niveau des unités centrales UCi qui, comme cela a été mentionné ci-dessus, ne connaissent que ce numéro logique.

Un canal logique peut être inactif, c'est-à-dire programmé comme étant non utilisé ou rendu inactif par une commande de l'unité centrale, ou encore actif.

Dans ce dernier cas, il peut être opérationnel, c'est-à-dire que toutes les ressources sont prêtes et que des informations sont reçues ou émises sur ce canal, ou suspendu, toutes les ressources étant prêtes mais aucune information n'ayant lieu d'être ni reçue ni émise.

Le logiciel des unités centrales dispose de commandes leur permettant de faire évoluer l'état d'un canal logique de manière à suspendre les communications sur un canal et à les reprendre plus tard sans aucune modification des paramètres (cas de l'émission où la suspension est automatique), ou à désactiver un canal afin de modifier dynamiquement sa programmation.

Avant de décrire en détail un processeur de communication, on décrira maintenant celle des structures de données qui sont nécessaires à sa mise en oeuvre.

Certaines de ces données sont internes au processeur de communication alors que d'autres sont placées en mémoire centrale.

On décrira tout d'abord les données externes placées en mémoire centrale.

Ces données comportent tout d'abord un certain nombre d'informations nécessaires à l'initialisation du processeur. Ces données ne faisant pas partie du cadre de la présente invention ne seront pas décrites plus en détail.

Les autres données externes ont pour but de permettre au processeur de communication de gérer les différents canaux qui lui sont associés.

Les informations nécessaires à l'initialisation des 32 canaux d'un processeur de communication TCi sont contenues dans 32 emplacements consécutifs de la mémoire Mi, qui constituent le bloc de contrôle du processeur.

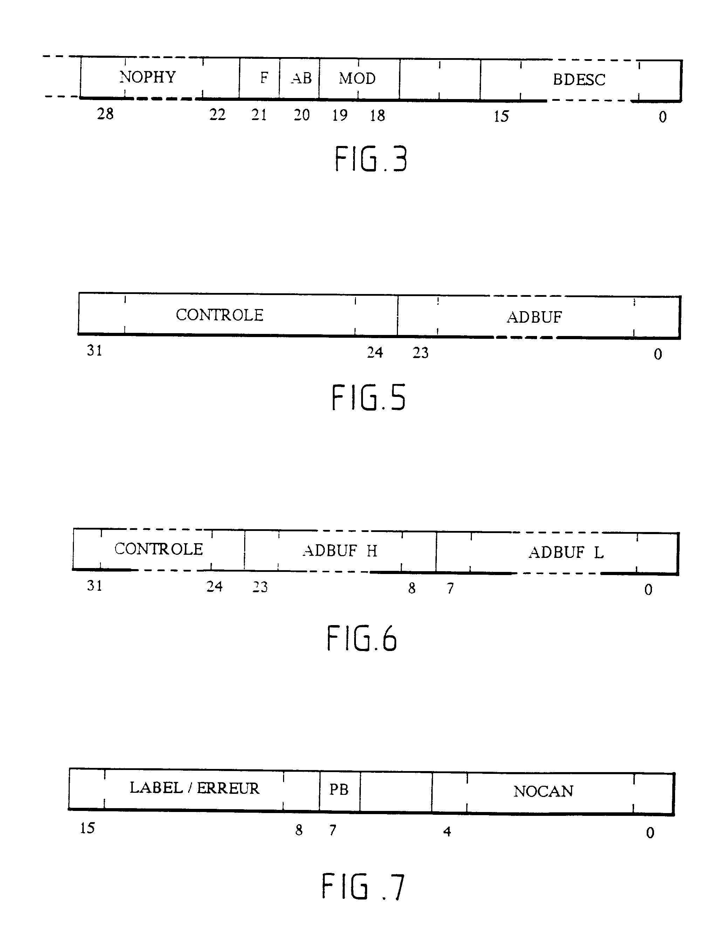

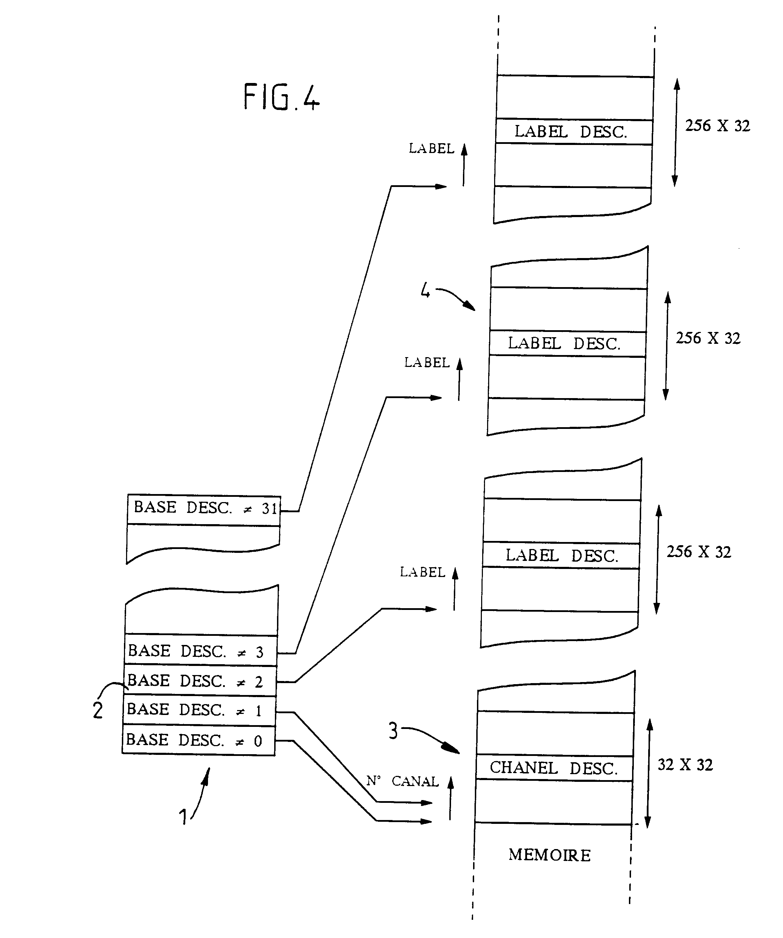

Chaque emplacement mémoire du bloc de contrôle est assimilable à un registre de contrôle de canal logique dont le format est représenté à la figure 3.

On ne décrira ci-après que les champs du registre de contrôle canal utiles à la compréhension de la présente description.

Les bits 0 à 15 (champs BDESC) contiennent l'adresse de base d'un descripteur associé au canal, qui sera décrit plus en détail ci-après.

Les bits 18 et 19 (champs MOD) décrivent le mode de fonctionnement du canal avec le codage suivant :

00 = inactif

01 = émission

10 = réception label

11 = réception anneau

On explicitera ci-après la signification des termes réception label et réception anneau.

Le bit 20 (champs AB) ne concerne que les canaux logiques 0 à 15 qui possèdent une liaison ARINC et est à 0 pour une laison avec le bus de communication interne seulement, et à 1 pour une liaison à la fois avec le bus de communication interne et avec la ligne ARINC correspondante.

Le bit 22 (champs F) définit la vitesse de transmission des données ARINC et ne concerne par conséquent également que les canaux logiques 0 à 15. Ce bit est à 0 pour une fréquence de 12,5 KHz et à 1 pour une fréquence de 100 KHz.

Enfin, les bits 22 à 28 (champs NOPHY) contiennent le numéro de canal physique auquel est associé le canal logique décrit par ce registre de contrôle.

La programmation des champs MOD et AB permet en ce qui concerne les canaux logiques 0 à 15 d'obtenir les configurations représentées au tableau 2 ci-dessous.

| CANAL LOGIQUE | MOD | AB | EFFET |
|---|---|---|---|
| 0 à 9 (RECEPTEURS) | 01 | 1 | Emission BCI (PC3) |
| | 01 | 0 | Emission BCI (PC3) |
| | 1X | 1 | Réception ARINC et émission BCI (PC1) |
| | 1X | 0 | Réception BCI (PC4) |
| 10 à 15 (EMETTEURS) | 01 | 1 | Emission ARINC et émission BCI (PC2) |
| | 01 | 0 | Emission BCI (PC3) |
| | 1X | 1 | Réception BCI et émission ARINC (PC5) |
| | 1X | 0 | Réception BCI (PC4) |
| TABLEAU 2 | | | |

On a désigné dans ce tableau par X l'une quelconque des valeurs 0 ou 1.

On a par ailleurs indiqué dans la colonne EFFET le processeur de communication de la figure 1 se trouvant dans l'état correspondant.

Le champ BDESC donne comme cela est indiqué ci-dessus l'adresse de base du descripteur de canal associé à chaque canal actif et qui est utilisé pour localiser les données à émettre ou les emplacements devant stocker les données reçues. La figure 4 montre l'organisation des descripteurs de canaux en mémoire.

Un descripteur de canal peut avoir deux formats différents :

- Réception en mode label :

Le descripteur de canal associé à ce mode de fonctionnement est constitué d'un tableau à 256 entrées indexé par le label du mot incident. Chaque entrée de ce tableau constitue un descripteur de label et son format sera décrit ci-après.

- Réception en mode anneau ou émission :

Le descripteur de canal associé à ces modes de fonctionnement ne comporte qu'un seul mot de 32 bits contenant l'adresse de la zone où se trouvent les données à émettre ou celles de la zone où doivent être rangées les données reçues. Cette adresse est initialisée par l'unité centrale et gérée par le processeur de communication. Bien entendu, il serait possible dans un autre mode de réalisation d'envisager également une émission en mode label.

On voit sur la figure 4 le bloc de contrôle 1 dont chaque entrée 2 constitue le registre de contrôle d'un canal logique contenant entre autre l'adresse de base du descripteur associé.

Dans le cas d'un canal en mode anneau, l'adresse de base est celle du début d'un tableau 3 à 32 entrées, l'adresse du descripteur d'un canal particulier étant obtenue par indexation de ce tableau par le numéro du canal logique.

Dans le cas d'un canal en mode label, l'adresse de base du descripteur est l'adresse du tableau 4 à 256 entrées précité, l'adresse de stockage d'un mot incident étant obtenue par indexation de cette adresse de base par le label de ce mot.

On a représenté à la figure 5 le format d'un descripteur de canal en mode label.

Les bits 0 à 23 (champ ADBUF) contiennent l'adresse de l'emplacement en mémoire où ranger le mot reçu en mode label.

Les bits 24 à 31 constituent un ensemble permettant de contrôle le flux des données ARINC reçues en fonction des SSM (Sign Status Matrix) et de leur SDI (Source/Destination Identifier) ainsi que de générer des interruptions.

La figure 6 représente le format d'un descripteur de canal en mode anneau.

Un tel descripteur de canal est constitué par un mot de 32 bits dont les bits 24 à 31 contiennent des informations relatives à la parité et à d'éventuelles interruptions sur chaque mot reçu par le canal considéré.

Les bits 0 à 23 (champs ADBUF H et ADBUF L) donnent l'adresse du début d'une zone mémoire de 256 mots de 32 bits exploitée en anneau, c'est-à-dire avec retour automatique au début quand la fin de zone est atteinte. Cette adresse est initialisée par l'unité centrale et gérée par le processeur de communication qui n'incrémente que sa partie basse (champ ADBUFL) chaque fois qu'un mot ARINC a été lu ou reçu.

On décrira maintenant les données internes au processeur de communication.

Ces données sont contenues dans un registre de commande, un registre d'état du processeur et un registre d'état d'interruption canal.

Le registre de commande est un registre de 16 bits utilisé par l'unité centrale pour transmettre des commandes au processeur de communication.

Ces commandes peuvent viser à l'initialisation du processeur, au contrôle de l'état d'un canal et au contrôle de l'état du processeur.

Les commandes d'initialisation visent à transmettre au processeur, à partir de la mémoire externe, l'ensemble des paramètres nécessaires à son fonctionnement,,et notamment son bloc de contrôle.

Les commandes de contrôle de l'état d'un canal visent à faire passer un canal de son état suspendu à son état opérationnel et réciproquement, ou de son état opérationnel à son état inactif et réciproquement.

Les commandes de contrôle de l'état du processeur permettent notamment de masquer ou démasquer l'accès direct à la mémoire, de manière à interdire un accès direct du processeur de communication lorsque l'unité centrale accède à un descripteur utilisé par le processeur de communication ou lorsque, pour des raisons de temps critique, on souhaite empêcher au processeur de communication l'utilisation du bus local.

Le registre d'état d'interruption canal est un registre de 16 bits accessible en lecture seulement et contenant les informations concernant une interruption de type canal. Le format de ce registre est représenté à la figure 7.

Les bits 0 à 4 (champ NOCAN) indiquent le numéro du canal logique qui a causé l'interruption.

Le bit 7 (champ PB) indique si le champ LABEL/ERREUR contient le label d'un mot qui a causé l'interruption ou un code d'erreur.

Enfin, les bits 8 à 15 (champ LABEL/ERREUR) indiquent soit le label qui a causé l'interruption si le bit 7 est à 0, soit si le bit 7 est à 1 un code d'erreur pouvant être un débordement en réception (bit 11 à 1), cas où un mot a été reçu sur le canal alors que le précédent n'a pas encore été écrit en mémoire), une erreur de format ARINC (bit 10 à 1), une erreur de parité (bit 9 à 1) ou une erreur bus en accès direct à la mémoire (bit 8 à 1).

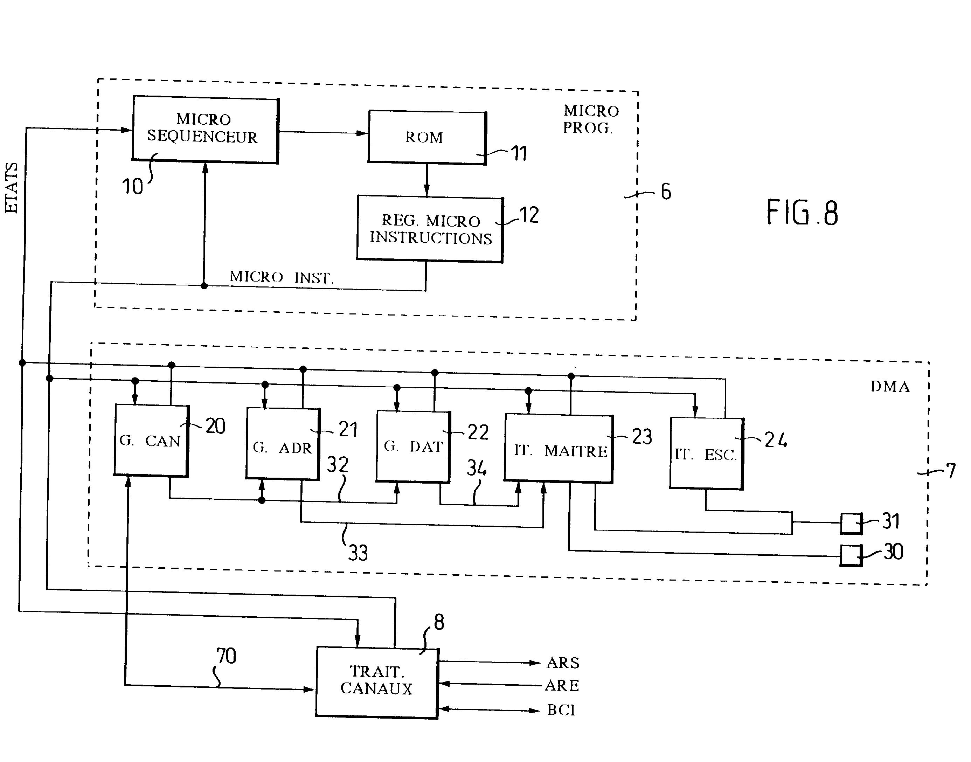

On décrira maintenant la structure d'un processeur de communication selon l'invention en référence à la figure 8.

On voit sur cette figure qu'un processeur de communication selon l'invention comporte essentiellement une partie de microprogramme 6, des circuits 7 d'accès direct à la mémoire (DMA) et une unité 8 de traitement des canaux.

Le circuit 6 de microprogramme et les circuits 7 de DMA constituent entre eux une structure de type microprocesseur comprenant de façon classique un chemin de données (DMA) et un séquenceur microprogrammé.

Cette partie effectue toutes les opérations liées à l'utilisation de la mémoire externe Mi, de la même façon que le fait l'unité centrale associée UCi. On ne décrira par conséquent la structure de ces circuits que de façon succinte, étant entendu que l'homme de métier spécialiste de la conception des microprocesseurs pourra les réaliser à partir de leur fonction qui, elle, sera décrite en détail. On remarquera de plus que ces circuits 6 et 7 pourraient être remplacés par un microcontrôleur distinct des circuits de traitement des canaux 8, dans un mode de réalisation plus flexible mais moins intégré.

Les circuits de microprogramme, composés pour l'essentiel d'un microséquenceur 10, d'une mémoire ROM 11 et de son registre de sortie 12, ont pour fonction de donner des ordres à l'ensemble du circuit en fonction des évènements à traiter.

Ces ordres, ou micro-instructions, sont contenus dans la mémoire 11 et sont lus selon une certaine séquence par le microséquenceur 10.

Celui-ci est le plus souvent au repos en attente d'un évènement à traiter. Son état de repos autorise les circuits 7 de DMA à explorer la mémoire d'échange décrite ci-après à la recherche d'une requête. Une telle requête est considérée par le microséquenceur comme un évènement, de la même façon que l'écriture par l'unité centrale d'une commande dans le registre de commande, également décrit ci-après. Une fois synchronisé par un évènement, le microséquenceur alimente le circuit en micro-instructions à un rythme prédéterminé, par exemple une micro-instruction toutes les 100 nano-secondes.

Le microséquenceur 10 peut s'arrêter en attente d'une condition de synchronisation lorsqu'il délègue le séquencement à une autre partie du circuit, ce qui est par exemple le cas d'un accès direct à la mémoire.

Pour réaliser ces fonctions, le microséquenceur adresse la mémoire 11 de manière à lire la micro-instruction souhaitée dans le registre 12 où elle sera disponible pour tous les éléments des circuits. Par ailleurs, le microséquenceur 10 est renseigné sur l'état de tous les autres circuits.

Les circuits 7 de DMA véhiculent, transforment et mémorisent des données parallèles qui peuvent être des données ARINC provenant des lignes d'entrée/sortie ou du bus de communication interne, ou destinées à ces entrées/sorties ou à ce bus, des adresses ou des descripteurs.

Les circuits de DMA sont constitués d'un bloc 20 de gestion des canaux logiques, d'un bloc 21 de gestion des adresses, d'un bloc 22 de gestion des données, d'un interface maître 23 et d'un interface esclave 24.

L'interface esclave 24 contient les éléments mis en permanence à la disposition du microprocesseur. Ces éléments sont constitués par :

- le registre de commande dans lequel l'unité centrale peut écrire à tout moment, et les circuits de décodage associés permettant de déterminer la commande en question pour faire passer les informations pertinentes au microséquenceur ;
- le registre d'état du processeur ; et
- le registre d'état des interruptions et une mémoire FIFO qui lui est attachée. Cette mémoire FIFO est une mémoire de 32 mots de 16 bits qui est écrite sur ordre du microséquenceur 10 à partir d'informations de toute provenance en fonction du canal logique en cours de traitement.

Chaque fois qu'une commande est reçue par l'interface esclave 24, celle-ci transmet l'information au microséquenceur qui se synchronise par cet évènement et fournit alors aux différents circuits les micro-instructions nécessaires.

Par ailleurs, étant donné le nombre d'interruptions susceptibles d'arriver, le registre d'état d'interruption canal est en fait la sortie de la mémoire FIFO précitée dans laquelle sont empilées les différentes interruptions générées par le processeur de communication. Si plusieurs interruptions sont pendantes simultanément, ce registre présente à l'unité centrale les informations concernant la plus ancienne.

A chaque lecture par l'unité centrale, la mémoire est décalée et les informations présentées sont perdues pour être remplacées par celles d'une autre interruption. Ce fonctionnement permet à l'unité centrale de traiter plusieurs interruptions en réponse à une demande unique en économisant ainsi des commutations de contexte.

L'interface maître 23 réalise les accès directs à la mémoire externe Mi. Ce bloc possède un fonctionnement autonome qui, sur demande du microséquenceur 10, lui permet de prendre possession du bus local puis de réaliser le séquencement total de l'accès dont l'adresse est fournie par le bloc de gestion des adresses 21, et la donnée, le cas échéant, par le bloc de gestion des données 22.

Le bloc se compose d'un chemin de données qui contient les multiplexeurs et registres permettant d'adapter la taille des éléments de données transmis à l'environnement rencontré, et d'un séquenceur réalisé comme un automate d'états finis qui pilote les signaux de contrôle du bus en fonction des réponses qui lui sont faites. La terminaison de l'accès mémoire est signalée au microséquenceur qui se resynchronise sur cet évènement.

Le bloc de gestion des adresses 21 forme toutes les adresses que doit générer le processeur de communication en accès direct à la mémoire, à savoir les adresses nécessaires à l'initialisation, les adresses des registres de contrôle canal, les adresses de descripteur et les adresses de données ARINC.

A cet effet, le bloc 21 possède des registres qui contiennent des éléments d'adresses ou des adresses complètes et des multiplexeurs qui permettent de concaténer des champs de diverses provenances du chemin de données, afin de former l'adresse qui sera utilisée pour un accès direct à la mémoire.

Le bloc 21 ne possède pas de comportement autonome et forme les adresses mémoire sur ordre du microséquenceur 10.

Le bloc de gestion des données 22 est semblable au bloc de gestion des adresses 21 mais forme les données que doit utiliser le processeur de communication pour les écrire en mémoire. Comme le bloc 21, il contient des multiplexeurs pour former ces données par concaténation des diverses provenances.

Le bloc 20 de gestion des canaux, qui constitue en fait une interface entre les circuits 7 de DMA et l'unité 8 de traitement des canaux, sera décrit en détail après cette dernière. On mentionnera simplement pour l'instant le fait que ce bloc 20 comprend une mémoire de configuration des canaux logiques qui contient les informations liées au traitement DMA de chacun des 32 canaux logiques, comme l'adresse de base du descripteur de canal et son mode de fonctionnement, informations issues du registre de contrôle canal du canal logique considéré et chargées à l'initialisation du processeur de communication.

On n'a représenté à la figure 8 que les liaisons entre les blocs 20 à 24 nécessaires à la compréhension de la présente invention.

L'interface maître 23 possède un accès 30 au bus d'adresse du bus local, et les interfaces maître 23 et esclave 24 possèdent un accès 31 au bus de données du bus local. Les accès directs à la mémoire externe Mi s'effectuent conformément aux spécifications particulières à l'unité centrale UCi.

Le bloc 20 de gestion des canaux possède des liaisons 32 avec le bloc 21 de gestion des adresses et le bloc 22 de gestion des données pour leur transmettre les informations contenues dans la mémoire de configuration, ainsi que les données prélevées dans l'unité 8 de traitement des canaux.

Les blocs 21 de gestion des adresses et 22 de gestion des données possèdent des liaisons 33 et respectivement 34 avec l'interface maître 23 pour lui fournir les adresses et les données nécessaires aux accès directs à la mémoire.

On décrira maintenant le fonctionnement des circuits 7 d'accès direct à la mémoire.

Le comportement du processeur de communication vis à vis d'une donnée à recevoir ou à émettre est dicté par des informations de contrôle internes issues du registre de contrôle canal, et contenues dans la mémoire de configuration, et par des informations de contrôle externes liées à des descripteurs situés en mémoire externe.

Lorsque le processeur de communication a besoin d'accéder à une donnée en mémoire, il obéit d'abord aux informations de contrôle internes puis, le cas échéant, demande à obtenir le bus local. Chaque demande de bus correspond à une série d'accès mémoire indivisible et le processeur ne rend le bus local qu'à la fin de ces opérations. Au cours d'un accès au bus, le processeur ne traite qu'une seule donnée. Il rend le bus aussitôt après et peut le redemander après un temps prédéterminé.

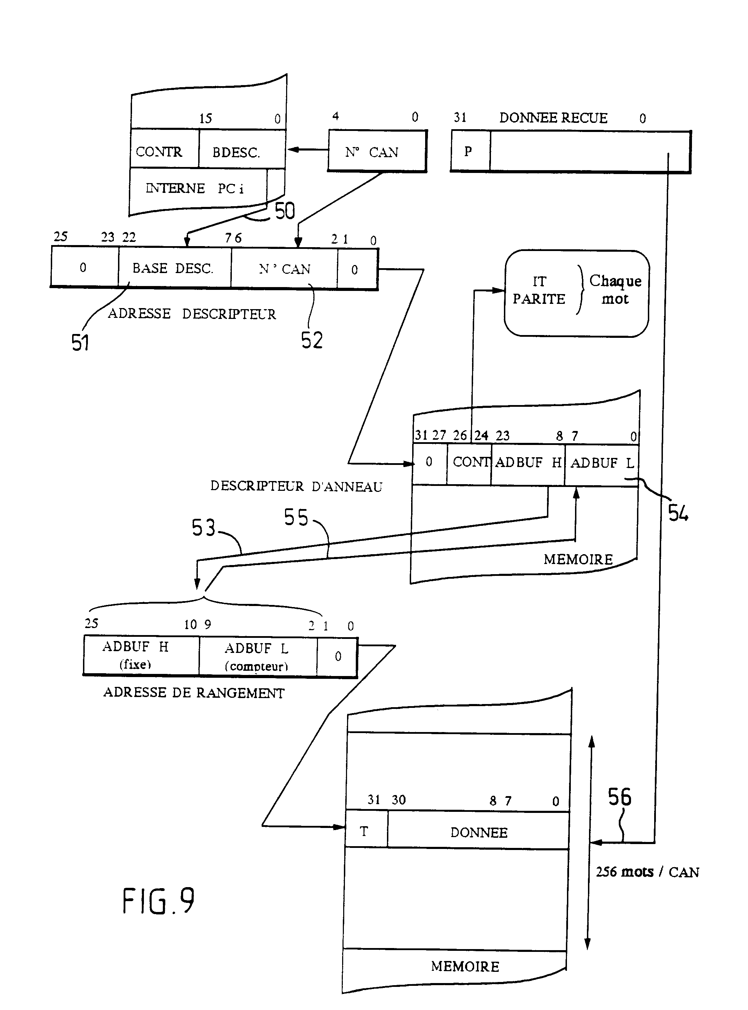

On décrira maintenant plus particulièrement une réception en mode anneau en référence à la figure 9.

Dans ce mode de fonctionnement, le processeur de communication range les données reçues dans une zone de mémoire de 256 mots gérée en anneau. La gestion de l'anneau fait intervenir deux pointeurs situés en mémoire. Le pointeur d'écriture est géré par le processeur de communication et le pointeur de lecture est géré par l'unité centrale et est inconnu du processeur.

Quand une donnée est reçue sur le canal logique n (on verra ci-après comment une donnée est associée au numéro du canal logique), le bloc 20 de contrôle des canaux fournit en 50 au bloc 21 de gestion des adresses, l'adresse 51 de base du descripteur. Avec cette adresse de base et le numéro 52 du canal, le bloc de gestion des adresses forme l'adresse du descripteur comme celà a été décrit ci-dessus en référence à la figure 4.

L'interface maître 23 lit en 53 ce descripteur d'anneau. Les informations de contrôle contenues dans ce descripteur sont alors prises en compte pour éventuellement émettre une interruption sur chaque mot reçu ou contrôler leur parité.

L'adresse contenue dans le descripteur d'anneau est alors incrémentée puis réécrite en 55 en mémoire.

L'adresse de rangement extraite du descripteur d'anneau est enfin utilisée en 56 pour écrire en mémoire la donnée reçue.

On remarquera que l'indexation de l'adresse de base de descripteur par le numéro de canal logique permet de regrouper les descripteurs d'anneau dans une même zone mémoire de 256 mots.

On remarquera également que chaque donnée reçue dans ce mode entraîne trois accès mémoire pour lire le descripteur d'anneau, pour le réécrire après incrémentation, après avoir écrit la donnée.

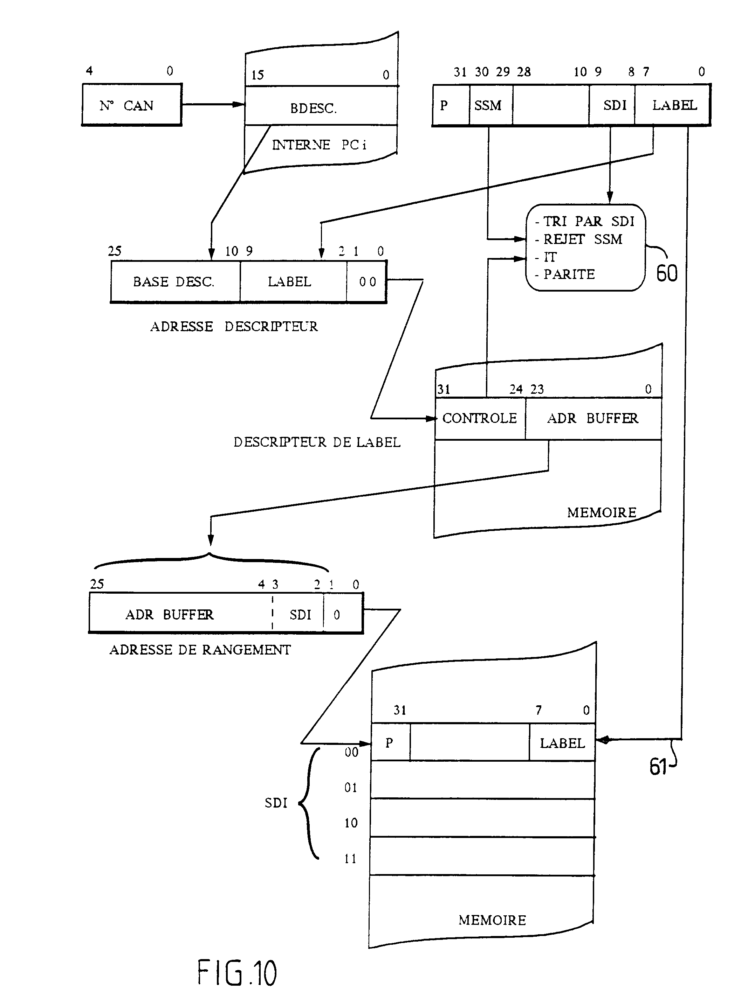

On décrira maintenant une réception en mode label en référence à la figure 10.

Le descripteur de canal associé à ce mode de fonctionnement est un tableau en mémoire de 256 mots consécutifs pointés par le champ BDESC du registre de contrôle canal.

Quand un mot ARINC est reçu sur le canal n, l'adresse du descripteur est formée à partir de l'adresse de base du descripteur déterminée par le numéro du canal logique et du label du mot reçu.

Le descripteur de label est alors lu en mémoire et les informations de contrôle sont prises en compte en 60.

Le descripteur de label fournit également l'adresse de rangement éventuellement indexée par le SDI du mot reçu, à laquelle en 61 le mot reçu est stocké.

On remarquera que, du fait que les descripteurs de label sont placés sur des frontières de blocs de 256 mots, l'indexation par le label du mot reçu peut être réalisée par simple concaténation du label avec l'adresse de base de descripteur.

Dans ce mode de fonctionnement, chaque donnée reçue entraîne deux accès mémoire, un pour accéder au descripteur de label et l'autre pour ranger la donnée.

Dans le présent mode de réalisation de l'invention, un seul mode d'émission est possible fondé sur la même structure de donnée que la réception en mode anneau.

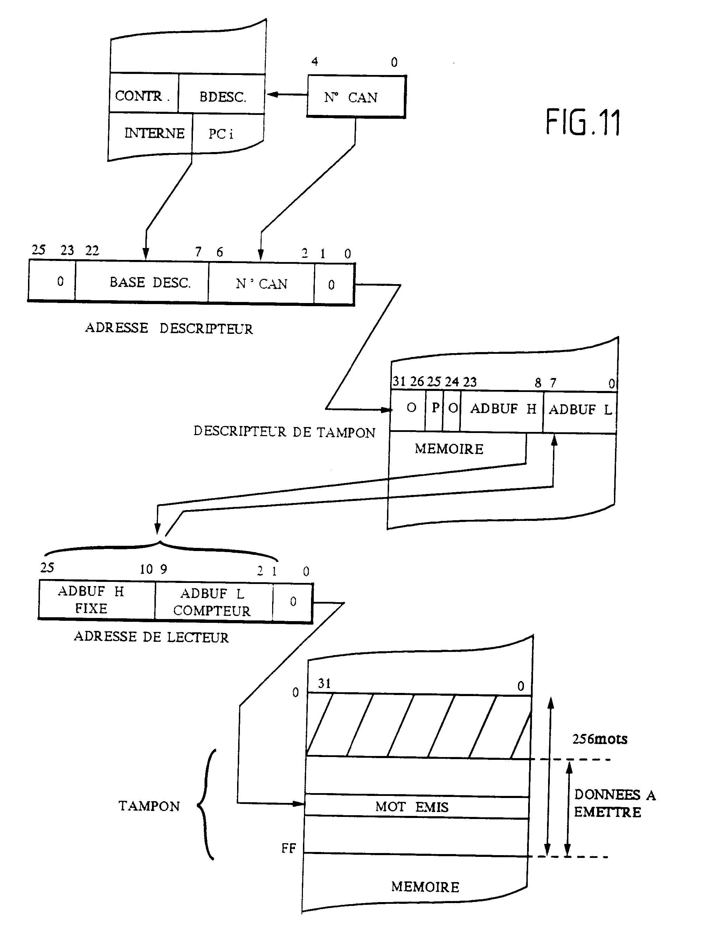

Les étapes d'une telle émission sont représentées à la figure 11.

Un tableau de mots à émettre est placé en mémoire par l'unité centrale. Quand le moment d'émettre arrive, l'unité centrale envoie au processeur de communication une commande de réveil du canal voulu (passage de l'état suspendu à l'état opérationnel).

Comme dans les cas précédents, le numéro du canal sur lequel doit être effectué l'émission permet de connaître l'adresse de base du descripteur qui, concaténée avec le numéro du canal, fournit l'adresse du descripteur.

Le descripteur est lu, ce qui permet d'obtenir l'adresse de lecture dans le tableau des mots à émettre. Cette adresse est incrémentée et réécrite dans le descripteur de tableau. Le mot est ensuite lu et émis.

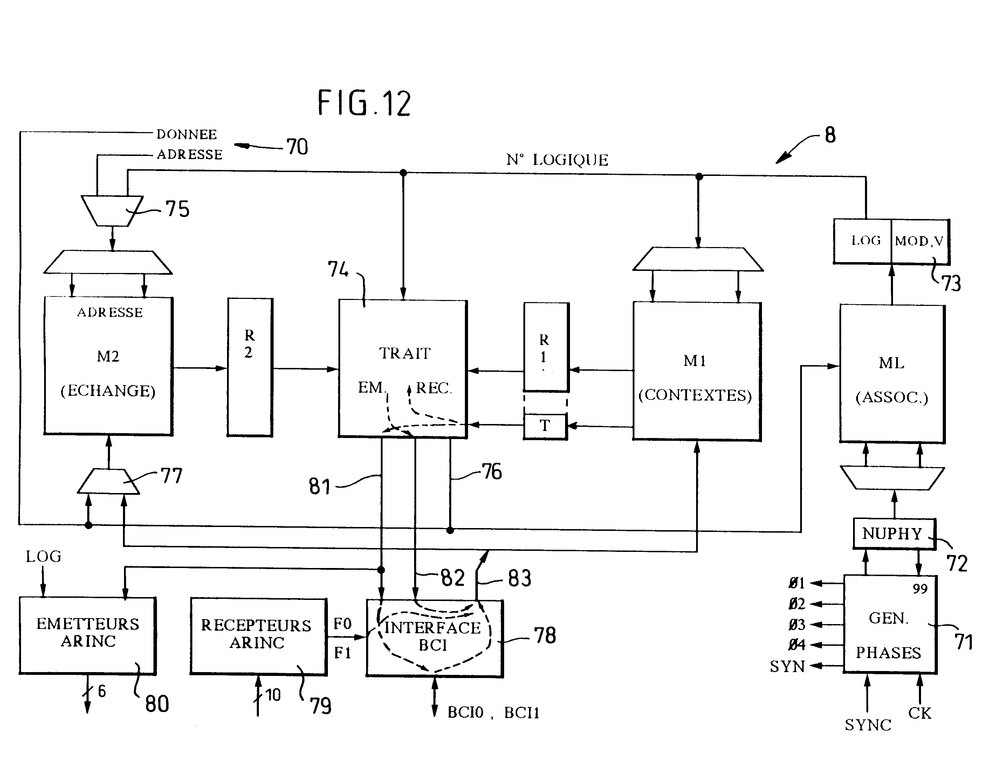

On décrira maintenant en référence à la figure 12, l'unité 8 de traitement des canaux.

Mis à part les liaisons avec les circuits de microprogramme visant à leur fournir des informations d'état, et à recevoir d'eux des micro-instructions, le seul lien de l'unité de traitement des canaux avec le reste du processeur de communication, consiste en un bus d'adresses et de données 70 utilisé pour initialiser et exploiter l'ensemble du processeur. Une fois initialisée, l'unité 8 fonctionne au rythme des évènements, un évènement correspondant à l'arrivée d'un bit sur une ligne d'entrée/sortie ou au passage d'un canal physique possédant une association valide avec un canal logique.

Du fait qu'il existe 100 canaux physiques pour 32 canaux logiques, cette unité est inactive pendant environ 30 % du temps, permettant les échanges avec les circuits de DMA.

L'unité 8 comprend un générateur de phases 71 relié aux fils d'horloge et de synchronisation du bus de communication interne pour fournir les signaux d'horloge nécessaires à l'unité 8. Ce générateur de phases 71 est ainsi notamment utilisé pour incrémenter un compteur 72 de canaux physiques, dont la fonction est d'adresser une mémoire d'association ML permettant d'associer un canal physique à un canal logique.

Le registre de sortie 73 de la mémoire ML est à son tour utilisé pour adresser une mémoire des contextes M1 et une mémoire d'échanges M2, son contenu étant également fourni à un circuit de traitement 74.

Le circuit 74 reçoit également en entrée le contenu du registre R1 de sortie de la mémoire M1 et celui du registre R2 de sortie de la mémoire M2.

La mémoire M2 peut également être adressée par le bus 70 grâce au multiplexeur 75.

Le circuit de traitement 74 possède une sortie 76 fournie en entrée des mémoires M1 et M2. La mémoire M2 peut également recevoir en entrée des données fournies à partir du bus 70 grâce au multiplexeur 77.

L'unité 8 de traitement des canaux comprend également une interface 78 avec les fils de données BCI0 et BCI1 du bus de communication interne, une interface 79 avec les dix lignes ARINC en réception et une interface 80 avec les six lignes ARINC en émission.

Le circuit de traitement 74 possède une sortie 81 reliée aux lignes ARINC en émission par l'intermédiaire de l'interface 80, et au bus de communication interne par l'interface 78.

Il possède également une sortie 82 reliée à l'interface 78 pour son retour par une liaison 83 vers la mémoire M1.

La liaison 83 relie également l'interface 79 et le bus de communication interne à la mémoire M1, par l'in-

EP 0 555 138 A1

termédiaire de l'interface 78. On décrira ci-après la fonction de cette liaison 83.

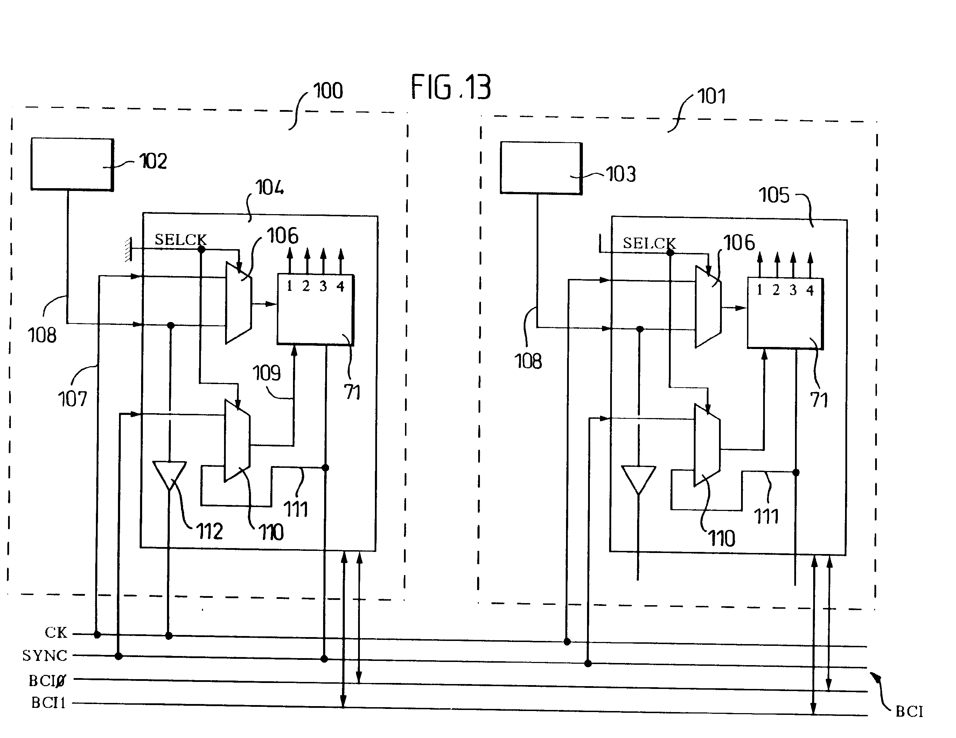

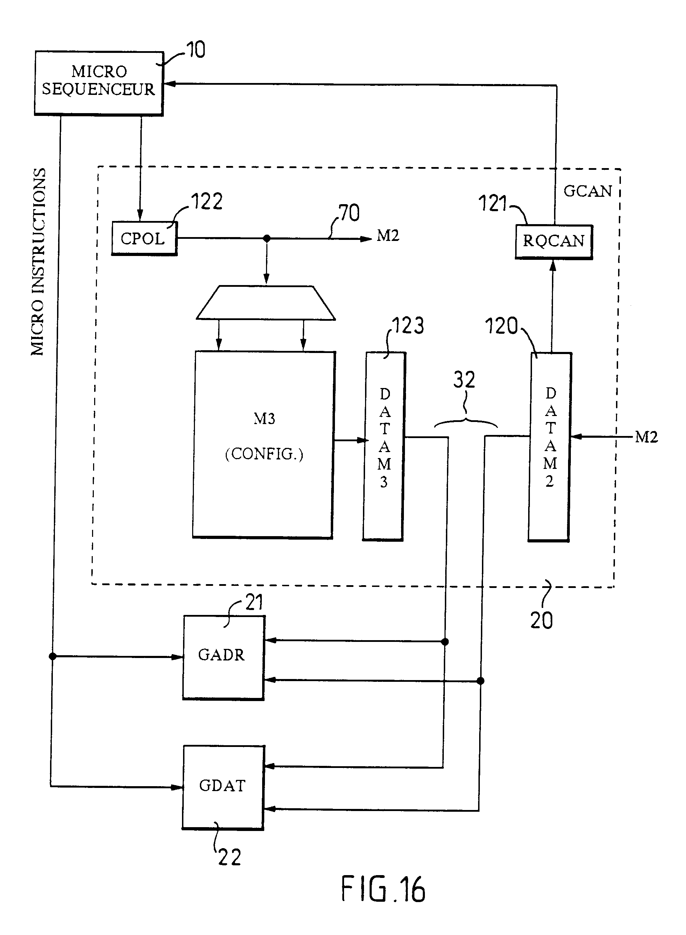

On décrira maintenant l'environnement du générateur de phases 71 en référence à la figure 13.

Cette figure représente schématiquement un processeur de communication maître 100 et un processeur de communication esclave 101 connectés au bus de communication interne BCI. Chaque processeur comporte une horloge interne 102-103 respectivement, et une unité de gestion d'horloge 104, 105 respectivement.

Chacune de ces unités de gestion d'horloge possède le générateur de phases 71 mentionné ci-dessus, générant une horloge tétraphasée de périodes 100 nano-secondes qui sert à séquencer la durée d'un canal physique en quatre instants de traitement à travers tout le circuit.

Chaque générateur de phases 71 reçoit en entrée la sortie d'un multiplexeur 106 dont une entrée 107 provient du fil CK du bus BCI et dont l'autre entrée 108 provient de l'horloge interne 102. La sélection de la sortie du multiplexeur 106 est réalisée à l'aide de son entrée SELCK qui est programmée à un niveau haut ou à un niveau bas.

Le générateur de phases 71 reçoit également en entrée un signal 109, issu d'un multiplexeur 110, qui reçoit sur une de ses entrées le signal SYNC issu du bus BCI et sur une autre entrée un signal de sortie de synchronisation provenant d'une sortie 111 du générateur de phases 71. Le multiplexeur 110 est également commandé par le signal SELCK.

Le signal issu de l'horloge interne local 102 peut être sélectivement appliqué au fil CK du bus BCI par l'intermédiaire d'un amplificateur 112, et de la même manière le signal 111 peut être sélectivement appliqué au fil SYNC du bus BCI.

Comme cela a déjà été indiqué, les quatre sorties d'horloge du générateur de phases 71 sont à la même fréquence mais déphasées de 90 degrés les unes par rapport aux autres ; par contre, la sortie de synchronisation 111 du générateur de phases 71 a une fréquence 100 fois plus faible que ses sorties d'horloge.

Chaque processeur de communication peut donc fournir un signal d'horloge au bus de communication interne. Le choix au sein du système du processeur qui pilote effectivement l'horloge du bus résulte du cablage particulier de celui-ci sur le fond de panier.

Le signal SELCK sert à indiquer au processeur de communication quelle source d'horloge il doit utiliser pour son séquencement.

Si SELCK est à son niveau bas (cas du processeur 100), le processeur est en mode communication, le bus de communication interne est opérationnel, le processeur maitre génère les signaux d'horloge et de synchronisation par cablage. L'horloge à utiliser est celle du bus par l'intermédiaire du multiplexeur 106 et le signal de synchronisation est également celui du bus par l'intermédiaire du multiplexeur 110.

Si SELCK est à son niveau haut (cas du processeur 101), le processeur est en mode local, le bus de communication interne n'est pas opérationnel mais le processeur peut continuer à être utilisé en communication ARINC. Le processeur prend son horloge 108 localement par l'intermédiaire du multiplexeur 106 et son signal de synchronisation 111 qu'il fabrique à partir de l'horloge, par l'intermédiaire du multiplexeur 110.

Le signal SELCK permet donc un fonctionnement dégradé d'un sous-ensemble particulier en cas de mauvais fonctionnement au niveau du bus de communication interne.

Sur la figure 13, le signal SELCK du processeur maitre 100 est à son niveau bas car ce processeur n'a pas la possibilité de se reconfigurer en cas de difficultés sur le bus. En revanche, les sous-ensembles esclaves tels que 101 peuvent continuer à fonctionner.

Si l'on revient maintenant à la figure 12, le compteur 72 de canaux physiques, la mémoire d'association des numéros logiques ML et son registre de sortie 73 constituent le séquenceur de canaux.

Le compteur de canaux physiques s'incrémente au rythme de l'horloge et se remet à zéro à chaque occurence du signal de synchronisation SYNC. Il compte donc de 0 à 99.

La valeur du compteur de canaux physiques sert à adresser la mémoire ML. Celle-ci contient les numéros logiques des canaux actifs dans le circuit, de telle sorte que si, par programmation par l'intermédiaire du bus 70, le canal logique LOG est associé au canal physique PHY alors :

$$ML (PHY - 1) = LOG, MOD$$

où MOD représente le mode de fonctionnement du canal logique en question. Le champ MOD contient la fréquence, l'association avec une ligne ARINC et/ou le bus de communication interne BCI (comme montré au tableau 2), le mode émission ou réception et un bit de validité V qui, s'il est à 1, indique que l'association ainsi formée est valide. La mémoire ML est en effet une mémoire de 100 places dont seules 32 peuvent être utilisées du fait que le processeur de communication ne traite que 32 canaux logiques. Le bit V permet par conséquent d'indiquer les emplacements de la mémoire ML non utilisés.

De la façon dont elle est remplie, la mémoire ML fournit par conséquent à chaque cycle canal le numéro logique, s'il existe, du canal associé au prochain canal physique.

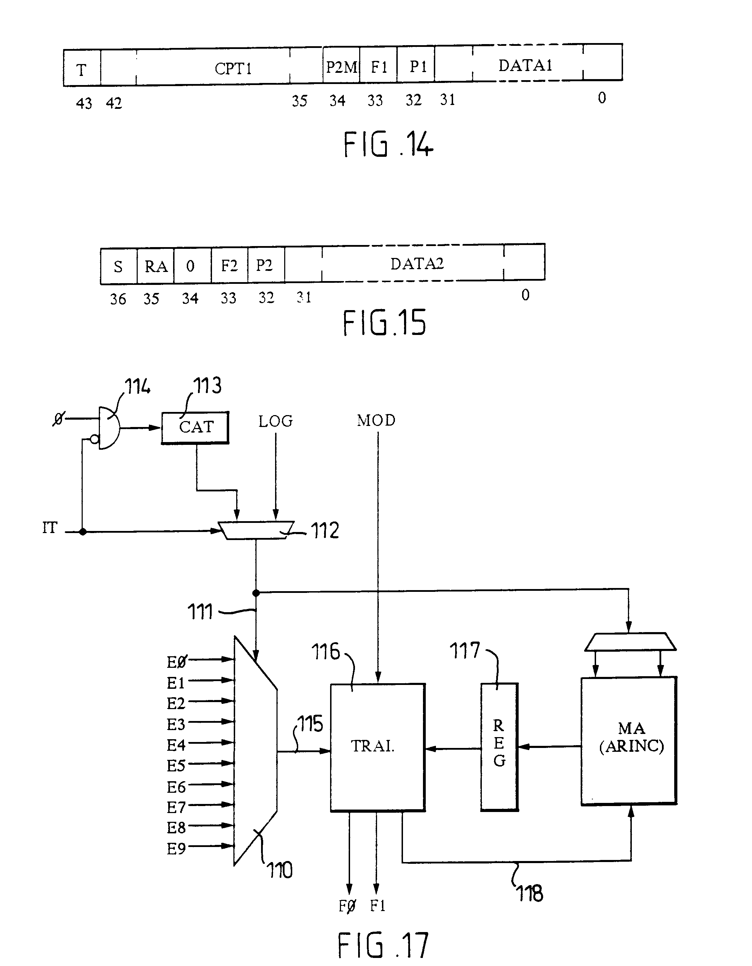

On décrira maintenant en référence à la figure 14 la mémoire M1 des contextes.

La mémoire M1 est une mémoire de 32 mots contenant les contextes des 32 canaux logiques susceptibles

13

d'être traités par le processeur de communication.

Le contexte d'un canal logique est défini par :
- le mot en cours de traitement,
- la position dans ce mot du prochain bit à traiter, et
- des indicateurs d'erreur de format ou de parité.

Un contexte de canal se comporte exactement comme le ferait un registre à décalage, la position du prochain bit à traiter indiquant le nombre de décalages déjà effectués.

Chaque mot de la mémoire M1 est associé à un canal logique et comporte 44 bits formés des champs suivants :
- DATA1 : il s'agit d'un champ de 32 bits contenant une donnée à traiter et en cours de décalage. Le décalage consiste pour le circuit 74 à réécrire ce champ après traitement avec un décalage des liaisons avec la mémoire M1. Le bit sortant est éventuellement émis alors que le bit entrant est constitué du bit reçu, selon le mode de fonctionnement.
- P 1 : ce champ de 1 bit stocke la parité courante calculée en fonction de la valeur stockée précédemment et de la valeur du bit en cours de traitement.
- F 1 : ce champ de 1 bit indique la détection d'une erreur de format en réception. Une erreur de format se produit si l'on reçoit plus ou moins de 32 bits pour un mot ARINC.
- P2M : ce bit d'autorisation de parité en émission indique si le bit 31 du mot à émettre doit être remplacé par la parité calculée au cours du processus d'émission, ou transmis sans changement.
- CPT1 : ce champ contient une valeur de comptage de 8 bits qui peut être considérée comme représentant un nombre décimal à 3 bits après la virgule. Cette valeur est incrémentée après chaque traitement d'un bit, de deux façons différentes selon la fréquence de traitement (en émission uniquement). Si l'émission est à 100 KHz, l'incrémentation porte sur le bit 38 (quatrième bit du compteur en partant du bit de poids le plus faible, c'est-à-dire bit unité du compteur), alors que si l'émission est à 12,5 KHz, l'incrémentation porte sur le bit 35 (bit de poids le plus faible du compteur), incrémentant ainsi la valeur du compteur de + 0,125. Ce mécanisme permet de ne pas différencier l'interprétation du compteur selon la fréquence. En réception, le compteur est toujours incrémenté de 1, car la fréquence de réception ne dépend pas du processeur de communication qui reçoit.
- T : ce bit constitue le tampon du pipeline de transfert du bus de communication interne. Tout bit entrant provenant soit de l'interface 79 de réception ARINC, soit du bus de communication interne, est d'abord transféré dans la zone tampon T par l'intermédiaire de la liaison 83 et de même, tout bit sortant est issu de la zone T, comme le montre à la figure 12 les traits interrompus illustrant le cheminement des données dans le circuit de traitement 74 et dans l'interface BCI 78, tant en émission qu'en réception.

On décrira maintenant la mémoire d'échange M2 en référence à la figure 15.

La mémoire d'échange M2 est une mémoire de 32 mots de 36 bits par où transitent tous les mots émis ou reçus par le processeur de communication. Chaque mot de la mémoire est associé à un canal logique et contient pour ce canal le prochain mot à émettre si celui-ci fonctionne en émission, ou le dernier mot reçu si celui-ci fonctionne en réception.

La mémoire M2 sert par conséquent de tampon entre les circuits de traitement série et les circuits parallèles de DMA. Dans cette mémoire, chaque donnée d'information est associée à un numéro de canal logique par l'emplacement qu'elle occupe.

Un mot de la mémoire M2 contient les champs suivants :
- DATA2 : ce champ de données de 32 bits sert à transférer les données entre les circuits de DMA et la mémoire M1 des contextes, dans les deux sens selon le mode émission ou réception. Dans le sens émission, ce transfert s'effectue à partir du bus 70 par l'intermédiaire du multiplexeur 77, de la mémoire M2, du registre R2 de sortie de cette mémoire, du circuit de traitement 74 et du bus 76. Dans le sens réception, ce transfert s'effectue par l'intermédiaire du registre R1 de sortie de la mémoire M1, du circuit de traitement 74, du bus 76, du multiplexeur 77, de la mémoire M2 puis vers le bus 70, comme cela sera décrit ci-après.
- P 2 : ce bit indique si le calcul de parité est demandé en émission, ou contient la parité calculée par le circuit de traitement en réception.
- F 2 : ce bit indique une erreur de format en réception.
- O : ce bit indique un dépassement, c'est-à-dire qu'un mot vient d'être reçu alors que le précédent n'a pas encore été évacué de la mémoire M2 par les circuits de DMA.
- R A : ce bit de requête/acquitement est mis à 1 par le circuit de traitement pour indiquer aux circuits de DMA que la mémoire M2 a été lue ou écrite. Il est remis à zéro par les circuits de DMA quand le traitement correspondant a été effectué, c'est-à-dire en émission quand un nouveau mot a été fourni à la mémoire M2 ou en réception quand la zone de données a été prélevée.

- S : ce bit est traité uniquement par les circuits de DMA et le séquenceur 10 pour mémoriser la suspension temporaire d'un canal particulier.

La mémoire M2 ayant été décrite, on peut maintenant procéder à la description du bloc 20 de gestion des canaux des circuits de DMA préalablement à la description de l'unité de traitement 74 et des interfaces 78,79 et 80 de l'unité de traitement. Cette description sera faite en référence à la figure 16.

Le bloc 20 de gestion des canaux comprend :

- un registre 120 qui reçoit une donnée lue dans la mémoire d'échange M2 de l'unité de traitement des canaux 8.
- un détecteur de requête 121 relié au registre 120 pour en extraire le bit de requête/acquitement et analyser ce bit.
- la mémoire précitée de configuration des canaux logiques M3. Cette mémoire M3 est une mémoire de 32 mots associés chacun à un des canaux logiques traités par le processeur de communication. Chacun des mots contient les informations nécessaires au traitement DMA du canal logique qui lui est associé, et en particulier l'adresse de base BDESC du descripteur de ce canal ainsi que son mode de fonctionnement. Cette mémoire M3 est chargée à l'initialisation du processeur à partir du bloc de contrôle situé en mémoire externe.
- un compteur de canaux logiques 122 qui s'incrémente automatiquement avec l'autorisation du microséquenceur 10, selon qu'une requête a ou n'a pas été trouvée dans la mémoire M2.

La fonction de cet ensemble est d'explorer la mémoire M2 à la recherche d'une requête de traitement en provenance de l'unité 8 de traitement des canaux.

A cet effet, le compteur 122 génère un numéro de canal logique qui est utilisé simultanément comme adresse des mémoires M2 et M3 pour lire le contenu de leur mot correspondant au canal logique considéré. L'adressage de la mémoire d'échange M2 s'effectue par l'intermédiaire du bus 70 et du multiplexeur 75.

Cette lecture ne s'effectue toutefois que si la mémoire M2 est disponible, c'est-à-dire si le canal physique en cours sur le bus de communication interne BCI n'est associé à aucun des canaux logiques du processeur de communication (association invalide).

Lorsque cette condition est remplie, le registre 120 est chargé avec le contenu du mot de la mémoire M2 correspondant à ce canal logique, et le registre 123 de sortie de la mémoire M3 est chargé avec le contenu de cette mémoire correspondant également à ce canal logique. Le bit de requête/acquitement contenu dans le registre 120 est alors analysé et si une requête est présente, elle est transmise au microséquenceur 10 qui bloque le compteur 122.

En réception, le microséquenceur déclenche alors le traitement en adressant les micro-instructions nécessaires au bloc 21 de gestion des adresses et au bloc 22 de gestion des données, auxquels les contenus des registres 120 et 123 sont transmis par la liaison 32 décrite ci-dessus.

En émission, lorsqu'une requête est présente, le traitement consiste à écrire dans la mémoire M2 un nouveau mot à émettre, prélevé dans la mémoire externe Mi par les circuits de DMA.

Quand le microséquenceur 10 a fini de traiter la requête, il débloque le compteur 122 et l'ensemble part de nouveau à la recherche d'une autre requête dans la mémoire M2.

Dans le cas où aucune requête n'est présente dans le registre 120, le compteur 122 est incrémenté jusqu'à ce qu'une requête soit trouvée.

Le bloc 20 de gestion des canaux logiques et la mémoire d'échange M2 qui lui est associée constituent par conséquent l'interface entre les circuits où les données sont traitées sous forme parallèle du côté du bus local, et les circuits où les données sont traitées sous forme série du côté du bus de communication interne.

On reviendra maintenant à la figure 12 pour en premier lieu décrire les interfaces série 78,79 et 80.

Ces interfaces ont pour fonction de convertir des données à destination ou en provenance du circuit 74 de traitement dans un format propre à celui-ci. Le format commun retenu est celui du bus de communication interne BCI déjà décrit.

On décrira tout d'abord en référence à la figure 17 l'interface 79 avec les lignes ARINC en réception.

Les entrées ARINC E0 à E9 sont appliquées à l'entrée d'un multiplexeur 110 dont l'entrée de commande 111 est formée par la sortie d'un autre multiplexeur 112.

Le multiplexeur 112 reçoit en entrée, d'une part, le numéro du canal logique en cours de traitement et, d'autre part, la sortie d'un compteur par dix 113 incrémenté par la sortie d'une porte ET 114. La porte 114 reçoit en entrée, d'une part, l'une des horloges appropriées issue du générateur de phases 71 et, d'autre part, un signal IT inversé. Le signal IT indique qu'il faut arrêter le comptage de manière à forcer le traitement d'un canal logique associé à un récepteur ARINC, en raison du passage sur le bus du canal physique correspondant.

Le signal IT est également appliqué à l'entrée de commande du multiplexeur 112.

Par conséquent, en l'absence de signal IT, le compteur par dix 113 est incrémenté à la fréquence de passage des canaux physiques sur le bus de communication interne, c'est-à-dire dans le cas présent à la fréquence de 10 MHz.

En l'absence de signal IT, la voie du multiplexeur 112 selectionné est celle correspondant à la sortie du compteur 113.

Par conséquent, les entrées E0 à E9 sont balayées en permanence, chaque entrée se retrouvant à la sortie 115 du multiplexeur 110 toutes les microsecondes.

La sortie 115 du multiplexeur 110 est appliquée en entrée d'un circuit de traitement 116 qui dispose également d'une information sur le mode de fonctionnement du canal logique en cours de traitement. Le circuit 116 reçoit également en entrée la valeur du registre 117 d'une mémoire ARINC MA adressée par la sortie 11 du multiplexeur 112.

La mémoire MA est une mémoire de 10 mots de 15 bits chargée par le circuit de traitement 116. Sur les 15 bits d'un mot, 3 sont utilisés pour réaliser une pile de bits reçus, et les autres pour détecter les changements de valeur en entrée et le comptage nécessaire à la détection des GAP.

Enfin, le circuit de traitement 116 possède deux sorties F0-F1 qui sont appliquées en entrée de l'interface BCI 78 pour leur transfert vers la mémoire M1 des contextes.

A chaque occurence d'un numéro d'entrée ARINC particulier (équivalent au numéro logique du canal), la valeur de cette entrée est transmise au circuit de traitement 116 par l'intermédiaire du multiplexeur 110. La valeur précédente mémorisée dans la mémoire MA est également transmise au circuit 116 par l'intermédiaire du registre 117.

Ces deux valeurs sont comparées et, si aucune différence n'est détectée, on en déduit qu'aucune nouvelle valeur n'est arrivée sur l'entrée ARINC en cours de traitement. On passe alors à l'entrée ARINC suivante.

Si, au contraire, une différence est détectée, on en déduit qu'une nouvelle valeur est arrivée et celle-ci est stockée dans la mémoire MA par l'intermédiaire de la liaison 118 entre cette mémoire et le circuit 116.

Les 3 bits de pile, ou de donnée, de chaque mot de la mémoire MA sont prévues pour permettre un éventuel empilage de données dans le cas où celles-ci ne pourraient pas être traitées en temps utile, du fait de la tolérance sur les fréquences ARINC.

Le prélèvement des données a lieu à chaque fois que le numéro d'entrée ARINC se présente sur l'entrée LOG du multiplexeur 112, ce qui se produit au rythme du canal physique associé sous le contrôle du séquenceur de canaux physiques.

Le signal IT bloque alors le compteur 113 et amène la sortie 111 du multiplexeur 112 à se commuter sur l'entrée LOG de ce multiplexeur. Le signal IT force donc le traitement de l'entrée considérée, traitement qui permet d'évacuer les données empilées, s'il y en a, vers les sorties F0 et F1 à destination de la mémoire M1 des contextes, puis des circuits de traitement 74.

Cet agencement réalise par conséquent un échantillonnage des entrées ARINC à la fréquence du compteur 113, soit une durée de période de 1 microseconde. Il serait donc capable de recevoir des entrées dans une gamme de fréquences de 0 à 500 KHz (voir normes ARINC).

Les valeurs de prélèvement qui sont envoyées sur les sorties F0 et F1 sont :
- 0 ou 1 si une donnée est présente dans la mémoire,
- BID si aucune donnée n'est présente et qu'un GAP n'est pas encore détecté,
- GAP si un GAP est détecté.

La détection d'un GAP a lieu après une absence de données supérieure à 1,5 période (bits ARINC), la valeur fractionnaire étant permise par le principe d'échantillonnage.

L'interface 80 avec les lignes ARINC en émission ne présente aucune difficulté.

Ces lignes en émission sont au nombre de 6 numérotées de 10 à 15 correspondant aux canaux logiques de même numéro. La fonction d'un circuit d'émission est de mémoriser la valeur fournie par le circuit de traitement 74 si le numéro logique du canal en cours de traitement correspond à son propre numéro.

La valeur mémorisée sera ensuite émise sur la sortie correspondante au moment de l'occurence du signal de synchronisation SYNC et sera maintenue pendant une durée égale à une demi-période ARINC à la fréquence considérée pour cette sortie (12,5 ou 100 KHz) afin de séquencer les signaux conformément à ce qu'attendent les buffers externes du commerce.

Ce mécanisme permet d'émettre à une fréquence rigoureusement égale à celle du signal SYNC, assurant ainsi une précision à l'émission largement supérieure au 1 % requis par la norme ARINC 429.

L'interface BCI 78 a pour fonction de déterminer, pour un canal logique donné, la valeur qui devra être transmise sur le bus de communication interne BCI ou celle qui, provenant de ce bus, devra être traitée à la prochaine occurence du canal logique considéré. Cette valeur provenant soit du bus de communication interne, soit du circuit de traitement 74, soit des circuits de réception ARINC 79, sera entre temps stockée dans la zone tampon T comme partie du contexte du canal logique considéré dans la mémoire des contextes M1.

Ce mécanisme permet d'utiliser le temps disponible pour un canal logique, soit 100 nano-secondes, pour réaliser un simple transfert de la mémoire M1 du processeur de communication émetteur à la mémoire M1 du processeur de communication récepteur. Les traitements étant ainsi, soit anticipés (en émission), soit différés (en réception), disposent de la durée complète du canal précédent ou respectivement du canal suivant.

L'interface 78 n'étant constitué que des circuits permettant d'assurer les transferts de bits représentés en traits interrompus à la figure 12, est à la portée de l'homme de métier et ne sera donc pas décrite plus en détail.

On décrira maintenant le circuit de traitement 74.

Ce circuit reçoit en entrée les informations issues de la mémoire d'association ML (numéro logique du canal physique actuellement présent et mode de fonctionnement de ce canal). Il reçoit également le contenu des mots des mémoires M1 et M2 correspondant au canal logique en cours.

Le circuit 74 a pour fonction de mettre à jour le contexte, après en avoir extrait le bit à émettre ou y avoir inclus le bit à recevoir, et à réécrire ce contexte dans la mémoire M1. Le bit à émettre est simplement mis à la disposition des interfaces 78 et 80 qui n'ont plus qu'à l'émettre sur le bus de communication interne ou respectivement sur une ligne ARINC en émission.

Le circuit de traitement a également pour fonction de transmettre à la mémoire d'échange M2 un mot complètement reçu ou d'y prélever un mot à destination de la mémoire M1 quand le précédent est fini d'émettre.

On décrira maintenant le fonctionnement en émission du circuit de traitement 74.

Un canal en émission est initialisé avec une requête dans la mémoire M2. Le circuit de traitement ne fait rien tant que cette requête n'est pas acquittée, indiquant la présence du premier mot à émettre dans la mémoire M2.

Quand l'acquittement est arrivé, le mot est prélevé de la mémoire M2 pour être placé dans la mémoire M1, comme cela a déjà été décrit, en même temps qu'une nouvelle requête est placé dans la mémoire M2, laissant ainsi au circuit de DMA le temps nécessaire à l'émission du mot pour en approvisionner un autre.

En même temps que la donnée à émettre, l'information sur le calcul de parité (AP) est prélévée et placée dans la mémoire M1. Tous les autres champs de la mémoire M1 sont alors placés à leur valeur initiale (parité courante, compteur, zone tampon pour le pipeline) indiquée dans la colonne de droite des tableaux 4 et 5 donnés ci-après. Le traitement effectif commence à la prochaine occurence du canal logique.

Au cours d'une émission, le mot à émettre est considéré comme possédant 36 bits du fait que la norme ARINC prévoit au moins 4 valeurs GAP entre les mots.

Le circuit de traitement 74 ne fait rien tant que la partie décimale du compteur n'est pas nulle, sinon incrémenter celui-ci de 0,125, permettant ainsi d'attendre sept passages du canal logique sans rien faire, au cas où l'émission a lieu à 12,5 KHz.

Si cette partie décimale est nulle, le circuit 74 communique à l'interface 78, la valeur du bit 0 du champ DATA1 de la mémoire 1 et réécrit ce champ avec un décalage vers les poids faibles. Le compteur est mis à jour (+ 1 ou + 0,125 selon la fréquence du canal logique) ainsi que la parité accumulée.

L'interface 78 retourne à la mémoire M1, la valeur à transmettre sur le bus de communication interne à la prochaine occurence du canal logique. Cette valeur est stockée dans la zone tampon T de la mémoire M1 et en sera extraite à cette prochaine occurence par l'interface BCI 78.

Ce processus continue jusqu'à ce que le compteur atteigne la valeur 31 indiquant ainsi la fin du décalage du mot à émettre.

Pour les valeurs de compteur comprise entre 32 et 35, le circuit de traitement 74 fournit l'information GAP au circuit d'émission, et pour la valeur 36 il se met en attente de l'acquittement de la requête préalablement postée dans la mémoire M2. L'arrivée de cet acquittement (en principe toujours présent) provoque un nouveau transfert de la mémoire M2 dans la mémoire M1, débutant ainsi l'émission d'un nouveau mot sur ce canal.

Le fonctionnement en réception est très similaire si ce n'est que le compteur est toujours incrémenté de + 1 et que la valeur à traiter est prélevée dans la zone tampon T de la mémoire M1 où elle a été placée par l'interface 78 au passage précédent du canal logique. Cette valeur, si elle est différente de BID, est cette fois introduite en position 31 de la zone de donnée DATA1 avant décalage et réécriture dans la mémoire M1. Les informations d'erreur et de parité sont mises à jour de la même façon. Si la valeur prélevée dans le tampon est BID, le circuit 74 ne fait aucun traitement.

Quand le compteur atteint la valeur 32, si la prochaine donnée différente de BID est bien un GAP, la réception est considérée comme terminée et la mémoire M2 est mise à jour avec une requête pour les circuits de DMA, la donnée reçue, sa parité et les informations d'erreurs.

On ne décrira pas en détail la structure de l'unité de traitement, le traitement courant consistant uniquement à déterminer les valeurs à inscrire dans M1 et M2. On donnera en revanche dans les tableaux 4 et 5 ci-après les détails du traitement effectué selon les valeurs pertinentes issues du contexte courant. L'homme de métier pourra sans difficulté réaliser le circuit logique permettant de réaliser ce traitement.

On rappellera tout d'abord que le traitement effectué dépend des informations suivantes :

- En émission, le traitement dépend de la valeur du champ compteur de la mémoire M1 et du bit de requête/acquittement de la mémoire M2. Le traitement consiste à déterminer les nouvelles valeurs à inscrire dans les mémoires M1 et M2 et à déterminer le bit à émettre, codé comme montré au tableau 3, sur les valeurs BIDO, GAPO et BIGO.

| BIDO | GAPO | BIGO | Valeur émise |
|------|------|------|--------------|
| 1 | 0 | X | BID |
| 0 | 1 | X | GAP |
| 0 | 0 | 0 | 0 |
| 0 | 0 | 1 | 1 |
| TABLEAU 3 | | | |

- En réception, le traitement effectué dépend de la valeur du champ compteur de la mémoire M1, de la valeur du bit entrant, des valeurs des bits O,F2,R/A et S de la mémoire M2 et du bit F1 de la mémoire M1.

Dans les tableaux 4 et 5 ci-après, les notations suivantes sont utilisées.

DATA1 < 0 > = bit 0 du champ DATA1 .

CPT1 + 1 [ 8 ] =   incrémentation du compteur par "1" ou par "8" selon la fréquence d'émission déterminée par la mémoire d'association ML, à savoir incrémentation de + 1 à 12,5 KHz et de + 8 à 100 KHz ce qui est une façon simple de représenter les + 0,125 et + 1 précités, considérant le compteur comme un nombre entier (non décimal). On a déjà décrit le procédé d'incrémentation des compteurs de la mémoire M1;

$\overrightarrow{DATA \quad 1}$   = ancienne valeur de DATA 1 décalée d'une position à droite;

A ⊕ B = ou exclusif (calcul de parité);

X = valeur inchangée ou sans importance;

BCIi = valeur entrante;

BCIi, $\overrightarrow{DATA1}$   = décalage à droite avec introduction d'un bit à gauche.

Le tableau 4 ci-dessous détaille le traitement en émission

| | | CPT1 <0:2> ≠ 0 | 0<CPT1<31 | CPT1 = 31 | 32<CPT1<34 | CPT1>35 | INIT |
|---|---|---|---|---|---|---|---|
| **M1** | P1 | P1 | F0DATA1<0> / DATA1↑ | X | X | 0 | 0 |
| | DATA1 | DATA1 | | X | X | DATA2 | 0 |
| | CPT1 | CPT1+1 | CPT1+1[8] | CPT1+1[8] | CPT1+1[8] | $\overline{0.RA}+CPT1+1[8].RA$ | 33 |
| | P2M | P2M | P2M | X | X | P2 | 0 |
| | F1 | X | X | X | X | X | 0 |
| **BIT EMIS** | BIDO | 1 | 0 | 0 | 0 | 0 | 0 |
| | GAPO | 0 | 0 | 0 | 1 | 1 | 1 |
| | BIGO | DATA1<0> | DATA1<0> | DATA1<0>.$\overline{P2M}$ + P1.P2M | DATA1<0> | DATA1<0> | DATA1<0> |
| **M2** | P2 | INCHANGE | INCHANGE | INCHANGE | INCHANGE | INCHANGE | 0 |
| | DATA2 | | | | | — | 0 |
| | 0 | | | | | 1 | 0 |
| | RA | | | | | INCHANGE | 0 |
| | F2 | | | | | INCHANGE | 0 |
| | S | | | | | | 1 |

TABLEAU 4 - TRAITEMENT EN EMISSION

On remarquera que l'initialisation du compteur est faite à 33. On verra que ceci est aussi le cas en réception. Cette valeur à été choisie pour simplifier la logique et peut conduire à émettre des GAP qui ne sont de toute manière pas gênants.

19

En ce qui concerne la colonne CPT1>35, la notation abrégée correspondant à CPT1 signifie que le compteur est normalement incrémenté si RA est à 1 et est mis à 0 si RA est à 0.> .

Par ailleurs, le circuit de traitement 74 calcule la parité du mot émis. Cette parité est émise à la place du bit 31 si le bit P2 de la mémoire M2 était à 1.

Enfin, le bit S n'est pas géré par le circuit 74, sauf à l'initialisation en émission où le canal se suspend lui-même. Ce bit n'est donc jamais changé par le traitement. Cela signifie que, en cas de suspension par les circuits de DMA, le mot en cours d'émission sera terminé normalement.

Le tableau 5 ci-dessous détaille le traitement en réception.

**TABLEAU 5 — TRAITEMENT EN RECEPTION**

| | Valeur reçue | CPT1 < 32 GAP | CPT1 < 32 BID | CPT1 < 32 GAP.BID | CPT1 = 32 GAP | CPT1 = 32 BID | CPT1 = 32 GAP.BID | CPT1 > 33 GAP | CPT1 > 33 BID | CPT1 > 33 GAP.BID | INIT |
|---|---|---|---|---|---|---|---|---|---|---|---|
| **M1** | P1 | 0 | P1 | P1⊕BCI1 | 0 | P1 | X | 0 | P1 | P1⊕BCI1 | 0 |
| | DATA1 | X | DATA1 | BCI1,$\overline{DATA1}$ | X | DATA1 | X | 0 | DATA1 | BCI1,$\overline{DATA1}$ | 0 |
| | CPT1 | 33 | CPT1 | CPT1+1[8] | 33 | CPT1 | 33 | CPT1 | CPT1 | 8 | 33 |
| | P2M | X | X | X | X | X | X | X | X | X | 0 |
| | F1 | 1 | F1 | F1 | 0 | F1 | F1 | F1 | F1 | F1 | 0 |
| **M2** | P2 | INCH. | INCH. | INCH. | P1 | INCH. | INCH. | INCH. | INCH. | INCH. | 0 |
| | DATA2 | INCH. | INCH. | INCH. | DATA1 | INCH. | INCH. | INCH. | INCH. | INCH. | 0 |
| | 0 | INCH. | INCH. | INCH. | RA | INCH. | INCH. | INCH. | INCH. | INCH. | 0 |
| | R A | INCH. | INCH. | INCH. | 1 | INCH. | INCH. | INCH. | INCH. | INCH. | 0 |
| | F2 | INCH. | INCH. | INCH. | F1 | INCH. | INCH. | INCH. | INCH. | INCH. | 0 |
| | S | INCH. | INCH. | INCH. | S | INCH. | INCH. | INCH. | INCH. | INCH. | 0 |

On remarque que la valeur du bit entrant intervient pour détecter les erreurs de format. Une erreur de format est détectée si un GAP arrive au milieu d'un mot, ou si une valeur autre que GAP ou BID arrive en 33ème position (mot trop long).

Par ailleurs, la réception de BID ne provoque aucun changement dans le contexte du canal et est simplement ignoré.

Enfin, le bit S ne provoque pas l'arrêt de la réception mais n'intervient qu'au niveau des circuits de DMA pour masquer la requête. La suspension en réception provoque donc des dépassements (bit O de la mémoire M2).

**Revendications**

1. Procédé de transmission de données d'informations entre une pluralité de sous-ensembles (SEi) d'un équipement, notamment embarqué, caractérisé par le fait qu'à chaque sous-ensemble est associé au moins un canal logique associé lui-même à au moins un canal physique, chaque sous-ensemble adressant uniquement les canaux logiques auxquels il est associé, et les différents canaux physiques étant multiplexés dans le temps sur un bus (BCI) de communication interne à l'équipement.

2. Procédé selon la revendication 1, dans lequel au moins un sous-ensemble est relié en outre à au moins une ligne d'entrée/sortie (AREi, ARSi), toute donnée d'information émise par un sous-ensemble sur une ligne d'entrée/sortie qui lui est reliée étant en outre transmise sur le bus de communication interne à tous les autres sous-ensembles, et toute donnée d'information reçue par un sous-ensemble sur une ligne d'entrée/sortie qui lui est reliée étant retransmise sur le bus de communication interne à tous les autres sous-ensembles.

3. Procédé selon l'une quelconque des revendications 1 et 2, dans lequel les données d'information sont traitées sous forme parallèle au niveau des canaux logiques, et sous forme série au niveau des canaux physiques.

4. Procédé selon l'une quelconque des revendications 1 à 3, dans lequel au moins un sous-ensemble est relié en outre à au moins une ligne d'entrée/sortie, toutes les lignes d'entrée/sortie fonctionnant à une fréquence sous-multiple d'une fréquence de base, la fréquence de fonctionnement du bus de communication interne étant un multiple de ladite fréquence de base.

5. Procédé selon l'une quelconque des revendications 1 à 4, dans lequel on transmet sur le bus de communication interne un bit de donnée d'information à chaque occurence d'un canal physique.

6. Système de communication pour équipement, notamment embarqué, comprenant une pluralité de sous-ensembles (SEi) dont l'un au moins comporte au moins une ligne d'entré/sortie (AREi,ARSi), toutes les lignes d'entrée/sortie fonctionnant à une fréquence sous-multiple d'une même fréquence de base, caractérisé par le fait que chaque sous-ensemble comporte en outre au moins un processeur de communication (PCi) relié à ladite ligne d'entrée/sortie, lesdits processeurs de communication étant en outre reliés entre eux par un bus (BCI) de communication interne sur lequel sont multiplexés une pluralité de canaux physiques à une fréquence multiple de ladite fréquence de base.

7. Système de communication selon la revendication 6, dans lequel le bus de communication interne est une liaison à une pluralité de fils, un premier fil (SYNC) véhiculant un signal de synchronisation à ladite fréquence de base, un deuxième fil (CK) véhiculant un signal d'horloge indiquant les changements de canaux physiques, et les autres fils (BCI0, BCI1) véhiculant des données d'information.

8. Système de communication selon la revendication 7, dans lequel chaque processeur de communication possède un compteur (72) de canaux physiques apte à être incrémenté par le signal d'horloge et à être remis à zéro par le signal de synchronisation pour la détermination des numéros des canaux physiques.

9. Système de communication selon la revendication 8, dans lequel chaque processeur de communication possède une horloge interne (102,103) et un générateur de phases (71) pour relier l'entrée d'incrémentation de son compteur de canaux physiques, soit au fil d'horloge du bus de communication interne, soit à son horloge interne, le générateur de phases étant également agencé pour élaborer un signal de synchronisation et des moyens étant prévus pour relier sélectivement la sortie de synchronisation du générateur de phases au fil de synchronisation du bus de communication interne, l'un des processeurs de communication du système ayant son horloge interne reliée au fil d'horloge du bus de communication interne et la sortie de synchronisation de son générateur de phases reliée au fil de synchronisation du bus de communication interne, et chaque processeur ayant l'entrée d'incrémentation de son compteur de canaux physiques reliée au fil d'horloge du bus de communication interne et son entrée de remise à zéro reliée au fil de synchronisation du bus de communication interne.

10. Système de communication selon l'une quelconque des revendications 6 à 9, dans lequel au moins un sous-ensemble comporte une unité centrale (UCi) et une mémoire (Mi) reliées par un bus local (BLi), le processeur de communication de ce sous-ensemble étant en outre relié audit bus local.

11. Système de communication selon la revendication 10, dans lequel chaque unité centrale est agencée pour échanger sur le bus local, avec le processeur de communication auquel elle est reliée, des données d'informations reliées à des numéros de canaux logiques (LOG) indépendants des canaux physiques, le processeur de communication étant agencé pour associer un canal logique de l'unité centrale à un canal physique du bus de communication interne.

12. Processeur de communication entre une pluralité de sous-ensembles d'un équipement, notamment embarqué, caractérisé par le fait qu'il comprend :
    - des moyens de liaison (6,7) à un premier sous-ensemble dudit équipement, agencés pour échanger avec ledit premier sous-ensemble des données d'informations reliées à au moins un numéro de canal logique ;
    - des moyens de liaison (8) à au moins un deuxième sous-ensemble dudit équipement, agencés pour échanger lesdites données d'information avec ledit deuxième sous-ensemble pendant la durée des occurences successives d'un canal physique, un ensemble de canaux physiques se suivant à une fréquence et selon un ordre prédéterminés ; et
    - des moyens d'association (ML) pour associer chaque canal logique à au moins un canal physique.

13. Processeur de communication selon la revendication 12, dans lequel lesdits moyens de liaison au premier sous-ensemble comprennent une unité de liaison (DMA) à une unité centrale (UCi) dudit premier sous-ensemble.

14. Processeur de communication selon l'une quelconque des revendications 12 et 13, dans lequel lesdits moyens de liaison au premier sous-ensemble comprennent des moyens d'accès direct (DMA) à une mémoire (Mi) dudit premier sous-ensemble.

15. Processeur de communication selon la revendication 14, dans lequel lesdits moyens d'accès direct comprennent des moyens (21,122) pour former une adresse de ladite mémoire du premier sous-ensemble au moins en fonction du numéro du canal logique associé auxdites données d'information, une mémoire (M3) contenant une information sur le mode de fonctionnement de ce canal logique, et des moyens pour lire ou écrire lesdites données d'information à ladite adresse selon ladite information sur le mode de fonctionnement du canal logique.

16. Processeur de communication selon la revendication 15, dans lequel lesdits moyens de formation d'adresse sont agencés pour former ladite adresse également en fonction d'une partie (LABEL) des données d'information échangées.

17. Processeur de communication selon l'une quelconque des revendications 12 à 16, dans lequel lesdits moyens de liaison au premier sous-ensemble comprennent une mémoire d'échange (M2) dont chaque zone de mémoire est affectée à un canal logique, et est prévue pour contenir soit des données d'information provenant dudit premier sous-ensemble et destinées aux moyens de liaison au deuxième sous-ensemble, soit des données d'information provenant des dits moyens de liaison au deuxième sous-ensemble et destinées au premier sous-ensemble, selon le mode de fonctionnement du canal logique considéré, et pour contenir une information de requête/acquittement.

18. Processeur de communication selon la revendication 17, comprenant des moyens pour donner une première valeur à ladite information de requête/acquittement lorsqu'un mot provenant des moyens de liaison au deuxième sous-ensemble a été placé dans ladite zone de mémoire à la disposition des moyens de liaison au premier sous-ensemble ou lorsqu'un mot placé dans ladite zone de mémoire par les moyens de liaison au premier sous-ensemble a été lu pour sa transmission aux moyens de liaison au deuxième sous-ensemble, selon le mode de fonctionnement du canal logique associé à cette zone de mémoire, et des moyens pour donner une deuxième valeur à ladite information de requête/acquittement lorsque le mot mis à la disposition des moyens de liaison au premier sou-ensemble a été lu par ces derniers ou, respectivement, lorsqu'un nouveau mot a été placé dans ladite zone de mémoire par les moyens de liaison au premier sous-ensemble en vue de sa transmission aux moyens de liaison au deuxème sous-ensemble.

19. Processeur de communication selon la revendication 18, dans lequel les moyens de liaison au premier sous-ensemble comprennent un compteur d'adressage (122) pour adresser successivement chaque zone de mémoire de la mémoire d'échange, des moyens (120) pour lire le contenu de cette zone de mémoire, des moyens (121) pour analyser la valeur de l'information de requête/acquittement contenue dans cette zone et pour arrêter ledit compteur d'adressage lorsque cette information de requête/acquittement a sa première valeur, et des moyens (6) pour, dans ce cas, et selon le mode de fonctionnement du canal logique associé à la zone de mémoire, placer dans cette zone un nouveau mot en vue de sa transmission aux moyens de liaison au deuxième sous-ensemble ou transmettre au premier sous-ensemble le mot lu, et pour donner sa deuxième valeur à l'informaton de requête/acquittement.

20. Processeur de communication selon l'une quelconque des revendications 17 à 19 dans lequel lesdits moyens de liaison au premier sous-ensemble comprennent une mémoire (M3) de configuration des canaux logiques dont chaque zone est affectée à un canal logique et est prévue pour contenir des informations nécessaires au traitement de ce canal logique par les moyens de liaison au premier sou-ensemble, cette mémoire de configuration étant adressée en synchronisme avec la mémoire d'échange.

21. Processeur de communication selon l'une quelconque des revendications 12 à 20, dans lequel lesdits moyens d'association comprennent un compteur (72) de canaux physiques et une mémoire d'association (ML) dont chaque zone de mémoire est adressée par ledit compteur de canaux physiques, et est prévue pour contenir au moins le numéro (LOG) d'un canal logique associé au canal physique correspondant à la valeur du compteur.

22. Processeur de communication selon la revendication 21, dans lequel chaque zone de mémoire de la mémoire d'association est en outre agencée pour contenir une information (V) indiquant si le canal physique correspondant à cette zone est effectivement associé à un canal logique.

23. Processeur de communication selon l'une quelconque des revendications 21 et 22, dans lequel chaque zone de mémoire de la mémoire d'association est en outre agencée pour contenir une information (MOD) sur le mode de fonctionnement du canal logique associé au canal physique correspondant à la valeur du compteur.

24. Processeur de communication selon l'une quelconque des revendications 12 à 23, dans lequel lesdits moyens de liaison au deuxième sous-ensemble comprennent une mémoire des contextes (M1) dont chaque zone de mémoire est affectée à un canal logique et est prévue pour contenir au moins un mot en cours de traitement sur le canal logique correspondant.

25. Processeur de communication selon la revendication 24, dans lequel chaque zone de mémoire de la mémoire des contextes est en outre pourvue d'un emplacement de mémoire (CPT 1) formant compteur pour contenir la position du prochain bit à traiter dans le mot en cours de traitement.

26. Processeur de communication selon l'une quelconque des revendications 24 et 25, dans lequel chaque zone de mémoire de la mémoire des contextes comprend en outre un emplacement (T) de mémoire apte à recevoir la valeur du prochain bit à émettre ou du dernier bit reçu.

27. Processeur de communication selon l'une quelconque des revendications 12 à 26, dans lequel lesdits moyens de liaison au deuxième sous-ensemble comprennent une unité de traitement (74) agencée pour recevoir d'une mémoire des contextes (M1), à chaque occurence d'un canal physique, des données relatives au contexte du canal logique associé à ce canal physique, ces données comportant au moins un mot en cours de traitement sur ce canal logique, et une interface (78) de liaison entre ladite unité de traitement et le deuxième sous-ensemble, l'unité de traitement étant agencée pour remettre à jour à chacune desdites occurences, lesdites données relatives au contexte en fonction au moins d'une information échangée avec ladite interface.

28. Processeur de communication selon l'une quelconque des revendications 12 à 27, dans lequel lesdits moyens de liaison au deuxième sous-ensemble comprennent une unité de traitement (74) reliée aux moyens de liaison au premier sous-ensemble par l'intermédiaire d'une mémoire d'échange (M2) dont chaque zone de mémoire est affectée à un canal logique et est prévue pour contenir au moins un mot de donnée d'information à échanger avec les moyens de liaison au premier sous-ensemble et une information de requête/acquittement, et une interface (78) de liaison entre ladite unité de traitement et le deuxième sous-ensemble, l'unité de traitement étant agencée pour, lorsque l'information de requête/acquittement a une certaine valeur, échanger un mot de données d'information avec la mémoire d'échange et donner une autre valeur à l'information de requête/acquittement, et pour, selon le mode de fonctionnement du canal logique, transmettre le mot échangé à l'interface ou recevoir de l'interface un nouveau mot à échanger.

29. Processeur selon l'une quelconque des revendications 27 et 28, dans lequel les liaisons entre l'unité de traitement et les mémoires sont des liaisons parallèles, et la liaison entre l'unité de traitement et l'interface est une liaison série.

30. Processeur de communication selon l'une quelconque des revendications 27 à 29, dans lequel les mémoires sont adressées par un registre (73) de sortie d'une mémoire d'association (ML) elle-même adressée par un compteur (72) de canaux physiques.

31. Processeur de communication selon l'une quelconque des revendications 12 à 30, comprenant en outre des moyens de liaison (79,80) à au moins une ligne d'entrée/sortie.

32. Processeur de communication selon l'une quelconque des revendications 12 à 31, dans lequel les moyens de liaison au deuxième sous-ensemble comprennent des moyens (78) de liaison à un bus (BCI) de communication interne à l'équipement, agencé pour véhiculer lesdites données d'information et des données d'horloge, et un compteur (71) de canaux physiques pour déterminer, à partir des données d'horloge prélevée sur le bus de communication interne, le numéro d'ordre dans le temps du canal physique présent sur le bus de communication interne.

FIG.1

FIG.2

CK

SYNC

BCIØ

BCI1

100ns

10µ s

N° CANAUX
PHYSIQUES

99   0   1   2   95   96   97   98   99   0

CYCLE BCI

96 CANAUX UTILISES

4 CANAUX VIDES

EP 0 555 138 A1

| NOPHY | | F | AB | MOD | | BDESC | |
|---|---|---|---|---|---|---|---|

28          22     21   20   19   18              15                    0

# FIG.3

| CONTROLE | ADBUF |
|---|---|

31                              24  23                              0

# FIG.5

| CONTROLE | ADBUF H | ADBUF L |
|---|---|---|

31              24  23              8   7                      0

# FIG.6

| LABEL / ERREUR | PB | | NOCAN | |
|---|---|---|---|---|

15                              8   7              4                      0

# FIG .7

## FIG.4

LABEL DESC.

256 X 32

LABEL

4

LABEL DESC.

256 X 32

LABEL

BASE DESC. ≠ 31

LABEL DESC.

256 X 32

LABEL

BASE DESC. ≠ 3

BASE DESC. ≠ 2

2

BASE DESC. ≠ 1

BASE DESC. ≠ 0

3

CHANEL DESC.

32 X 32

N° CANAL

1

MEMOIRE

FIG.8

EP 0 555 138 A1

FIG.9

FIG.10

FIG.11

ADRESSE DESCRIPTEUR

DESCRIPTEUR DE TAMPON

ADRESSE DE LECTEUR

TAMPON

256mots

DONNEES A EMETTRE

MOT EMIS

FF

MEMOIRE

FIG.12

FIG.13

EP 0 555 138 A1

FIG.16

| T | | CPT1 | | P2M | F1 | P1 | | DATA1 | |
|---|---|---|---|---|---|---|---|---|---|

43 42                                     35   34   33   32   31                    0

## FIG .14

| S | RA | 0 | F2 | P2 | | DATA2 | |
|---|---|---|---|---|---|---|---|

36   35   34   33   32   31                              0

## FIG .15

FIG .17

**Office européen des brevets**

# RAPPORT DE RECHERCHE EUROPEENNE

Numero de la demande

EP 93 40 0254
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 259 223 (LICENTIA PATENT-VERWALTUNGS-GMBH) | 1,3 | G06F13/372 |
| A | * page 3, ligne 9 - page 5, ligne 3 * | 6,8,12, 29,32 | |
| | * page 6, ligne 6 - page 14, ligne 19; figures 1,2 *<br>--- | | |
| A | US-A-4 536 877 (LIVINGSTON ET AL.) | 1,2,4,6, 12-14, 17,28, 29,31 | |
| | * colonne 4, ligne 48 - colonne 7, ligne 54; figures 1-3 *<br>--- | | |
| A | US-A-4 556 939 (READ) | 1,3, 6-10,12, 32 | |
| | * colonne 1, ligne 18 - colonne 2, ligne 47 *<br>* colonne 3, ligne 18 - colonne 5, ligne 60 *<br>* colonne 7, ligne 6 - ligne 46; figures 1,2,11 *<br>--- | | DOMAINES TECHNIQUES RECHERCHES (Int. Cl.5) |
| A | EP-A-0 185 260 (ALCATEL N.V.) | 1,10, 12-14, 17,19, 23,28 | G06F |
| | * colonne 1, ligne 49 - colonne 5, ligne 50; figure 1 *<br>--- | | |
| A | EP-A-0 282 267 (ARISTACOM INTERNATIONAL INC.)<br>* page 3, ligne 15 - ligne 21 *<br>* page 3, ligne 35 - ligne 45 *<br>* page 15, ligne 61 - page 17, ligne 50; figures 4,5 *<br>---<br>-/-- | 24-26 | |

Le présent rapport a été établi pour toutes les revendications

| Lieu de la recherche | Date d'achèvement de la recherche | Examinateur |
|---|---|---|
| LA HAYE | 17 MAI 1993 | SEMPLE M. |

Office européen
des brevets

**RAPPORT DE RECHERCHE EUROPEENNE**

Numero de la demande

EP    93 40 0254
Page 2

| Catégorie | Citation du document avec indication, en cas de besoin, des parties pertinentes | Revendication concernée | CLASSEMENT DE LA DEMANDE (Int. Cl.5 ) |
|---|---|---|---|
| | **DOCUMENTS CONSIDERES COMME PERTINENTS** | | |
| A | US-A-5 048 010 (NAKABAYASHI ET AL.)<br>* colonne 1, ligne 6 - ligne 49 *<br>* colonne 2, ligne 7 - ligne 35 *<br>* colonne 2, ligne 63 - colonne 4, ligne 8; figures * | 12,15,20 | |
| | --- | | |
| A | US-A-4 704 717 (KING JR.)<br>* colonne 2, ligne 49 - colonne 3, ligne 63 *<br>* colonne 4, ligne 19 - colonne 5, ligne 19 *<br>* colonne 5, ligne 45 - colonne 6, ligne 11 *<br>* colonne 6, ligne 27 - colonne 7, ligne 19; figures * | 15,16 | |
| | ----- | | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 17 MAI 1993 | SEMPLE M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
&&: membre de la même famille, document correspondant

EPO FORM 1503 03.82 (P0402)